(19) Europäisches Patentamt
European Patent Office
Office européen des brevets

(11) **EP 3 252 547 B1**

(12) **EUROPÄISCHE PATENTSCHRIFT**

(45) Veröffentlichungstag und Bekanntmachung des Hinweises auf die Patenterteilung:
**03.07.2019   Patentblatt 2019/27**

(51) Int Cl.:
**G05B 5/01** *(2006.01)*      **G05B 11/28** *(2006.01)*

(21) Anmeldenummer: **17168918.5**

(22) Anmeldetag: **02.05.2017**

(54) **VERFAHREN ZUM STEUERN EINER BEWEGUNG EINES BEWEGLICH GELAGERTEN KÖRPERS EINES MECHANISCHEN SYSTEMS**

METHOD FOR CONTROLLING A MOVEMENT OF A MOBILE BODY OF A MECHANICAL SYSTEM

PROCÉDÉ DE COMMANDE DU MOUVEMENT D'UN ÉLÉMENT MOBILE D'UN SYSTÈME MÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.12.2017   Patentblatt 2017/49**

(73) Patentinhaber: **Primetals Technologies Austria GmbH**
**4031 Linz (AT)**

(72) Erfinder:
• **Keintzel, Georg**
  **4221 Steyregg (AT)**
• **Haas, Rainer**
  **4020 Linz (AT)**
• **Kogler, Helmut**
  **4204 Reichenau (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
**WO-A1-2016/012471      DE-A1-102013 015 453**

EP 3 252 547 B1

**Beschreibung**

Die Erfindung betrifft ein Verfahren zum Steuern einer Bewegung eines beweglich gelagerten Körpers eines mechanischen Systems gemäß dem Oberbegriff des Anspruchs 1. Des Weiteren betrifft die Erfindung ein mechanisches System gemäß dem Oberbegriff des Anspruchs 15.

Mit einem Medium betriebene Antriebseinheiten werden in unterschiedlichen technischen Gebieten dazu eingesetzt, einen beweglich gelagerten Körper anzutreiben. Zum Beispiel werden solche Antriebseinheiten bei Baumaschinen, bei Werkzeugmaschinen oder in Walzwerken eingesetzt. Typischerweise wird eine Antriebsbewegung einer solchen Antriebseinheit mithilfe eines Steuerventils gesteuert.

Aus der DE 10 2013 015 453 A1 sind eine Hubkolbenpumpe mit einem elektrischen Antrieb, der eine Magnetspule und mehrere Steuerventile umfasst, sowie ein Verfahren zum Betrieb einer derartigen Hubkolbenpumpe bekannt. Die Hubkolbenpumpe fördert in einer ersten Betriebsart ein Arbeitsfluid aktiv zu einem Verbraucher, lässt in einer zweiten Betriebsart das Arbeitsfluid passiv zurückfließen und saugt in einer dritten Betriebsart das Arbeitsfluid aktiv vom Verbraucher ab. Dabei erfolgt die Umschaltung zwischen den Betriebsarten nur durch eine Änderung der Arbeitsfrequenz und gegebenenfalls der Signalform des elektrischen Eingangssignals der Magnetspule. In der ersten Betriebsart wird eine Arbeitsfrequenz verwendet, die unterhalb der Eigenfrequenz der Steuerventile liegt, sodass der Hub der Steuerventile eine sehr geringe Phasenverschiebung relativ zur Bewegung des elektromagnetischen Antriebs aufweist. Für die zweite und dritte Betriebsart wird die Pumpe bei Frequenzen nahe der Eigenfrequenz bzw. mit Frequenzen größer als der Eigenfrequenz der Steuerventile betrieben, sodass die Steuerventile eine größere Phasenverschiebung zur Bewegung des Pumpenkolbens aufweisen und sich dadurch eine passive Rückströmung oder eine aktive Rückförderung des Arbeitsfluids einstellt.

Bei einem mechanischen System, das einen beweglich gelagerten Körper sowie eine mit einem Medium betriebene Antriebseinheit zum Antreiben des beweglich gelagerten Körpers aufweist, kann es bei einer Antriebsbewegung der Antriebseinheit zu einer Anregung unerwünschter Schwingungen des beweglich gelagerten Körpers bzw. des gesamten mechanischen Systems kommen.

Solche Schwingungen lassen sich unter anderem auf die Trägheit und/oder die Dämpfungseigenschaften des mechanischen Systems zurückführen. Falls der beweglich gelagerte Körper dreh-/schwenkbar gelagert ist, kann dies zu einer ungünstigen Schwingungsneigung mit einer geringen Eigenfrequenz führen. Oftmals ist es aufgrund technischer Randbedingungen nur eingeschränkt möglich, die Schwingungsneigung eines mechanischen Systems konstruktiv zu verringern.

Liegt eine Schaltfrequenz eines Steuerventils, mit dem eine Antriebsbewegung der Antriebseinheit gesteuert wird, in der Nähe einer Eigenfrequenz des mechanischen Systems, können bei der Anregung solcher unerwünschter Schwingungen besonders hohe Schwingungsamplituden auftreten.

Eine Aufgabe der Erfindung ist es, eine Anregung unerwünschter Schwingungen in einem mechanischen System zu vermeiden oder zumindest zu reduzieren.

Diese Aufgabe wird erfindungsgemäß gelöst durch ein Verfahren nach Anspruch 1 sowie durch ein mechanisches System nach Anspruch 15.

Bei dem erfindungsgemäßen Verfahren ist vorgesehen, dass das mechanische System eine mit einem Medium betriebene Antriebseinheit sowie ein Steuerventil umfasst, der beweglich gelagerte Körper durch die Antriebseinheit angetrieben wird und eine Antriebsbewegung der Antriebseinheit mithilfe des Steuerventils gesteuert wird. Weiter wird bei dem erfindungsgemäßen Verfahren das Steuerventil mit einem Steuersignal angesteuert, welches einen ersten sowie einen weiteren Schaltimpuls mit jeweils einer vorgegebenen Impulsdauer umfasst, wobei die Impulsdauer des ersten Schaltimpulses gleich der Impulsdauer des weiteren Schaltimpulses ist und ein zeitlicher Abstand zwischen dem Beginn des ersten Schaltimpulses und dem Beginn des weiteren Schaltimpulses auf eine Eigenperiodendauer des mechanischen Systems abgestimmt ist.

Das erfindungsgemäße mechanische System weist einen beweglich gelagerten Körper, eine mit einem Medium betreibbare Antriebseinheit zum Antreiben des beweglich gelagerten Körpers und ein Steuerventil zum Steuern einer Antriebsbewegung der Antriebseinheit auf. Zudem umfasst das erfindungsgemäße mechanische System eine Steuereinheit, welche dazu eingerichtet ist, ein Steuersignal zur Ansteuerung des Steuerventils zu erzeugen, welches Steuersignal einen ersten sowie einen weiteren Schaltimpuls mit jeweils einer vorgegebenen Impulsdauer umfasst, wobei die Impulsdauer des ersten Schaltimpulses gleich der Impulsdauer des weiteren Schaltimpulses ist und ein zeitlicher Abstand zwischen dem Beginn des ersten Schaltimpulses und dem Beginn des weiteren Schaltimpulses auf eine Eigenperiodendauer des mechanischen Systems abgestimmt ist.

Vorteilhafte Weiterbildungen sind jeweils Gegenstand abhängiger Patentansprüche sowie der nachfolgenden Beschreibung und können sich sowohl auf das Verfahren als auch auf das mechanische System beziehen.

Die Erfindung beruht auf der Erkenntnis, dass es in Abhängigkeit der Trägheit des mechanischen Systems zum (Nach-)Schwingen des beweglich gelagerten Körpers kommt, falls das Steuerventil mit einem Steuersignal angesteuert wird, welches einen einzigen Schaltimpuls aufweist, mit dem eine Antriebsbewegung der Antriebseinheit bewirkt wird.

Wird das Steuerventil hingegen mit einem Steuersignal angesteuert, welches einen ersten sowie einen weiteren Schaltimpuls gleicher Impulsdauer umfasst, wobei ein zeitlicher Abstand zwischen dem Beginn des ersten Schaltimpulses und dem Beginn des weiteren Schaltimpulses auf eine Eigenperiodendauer des mechanischen Systems abgestimmt ist, kann ein solches (Nach-)Schwingen des beweglich gelagerten Körpers unterdrückt oder zumindest reduziert werden. Zudem kann die Dynamik des mechanischen Systems erhöht werden.

Das erfindungsgemäße mechanische System ist vorzugsweise zur Durchführung des erfindungsgemäßen Verfahrens, insbesondere zur Durchführung einer vorteilhaften Weiterbildung des erfindungsgemäßen Verfahrens gemäß einem der abhängigen Patentansprüche und/oder der nachfolgenden Beschreibung, eingerichtet.

Die Formulierung, dass "der zeitliche Abstand zwischen dem Beginn des ersten Schaltimpulses und dem Beginn des weiteren Schaltimpulses auf eine Eigenperiodendauer des mechanischen Systems abgestimmt ist" kann dahingehend verstanden werden, dass dieser zeitliche Abstand von besagter Eigenperiodendauer abhängig ist bzw. eine Funktion der Eigenperiodendauer ist. Das mechanische System kann zusätzlich zu dem beweglich gelagerten Körper, der Antriebseinheit und dem Steuerventil weitere Elemente umfassen, die mit mindestens einem dieser Elemente zusammenwirken und insbesondere mit mindestens einem dieser Elemente in Kontakt und/oder verbunden sind.

Als Eigenperiodendauer ist der zu einer Eigenfrequenz des mechanischen Systems gehörende Kehrwert der Eigenfrequenz zu verstehen. Die Eigenperiodendauer ist sinnvollerweise eine Eigenperiodendauer eines schwingungsfähigen Teils des mechanischen Systems. Der schwingungsfähige Teil des mechanischen Systems umfasst vorzugsweise zumindest die Antriebseinheit und den beweglich gelagerten Körper. Darüber hinaus kann der schwingungsfähige Teil des mechanischen Systems weitere Elemente des mechanischen Systems umfassen.

Besagte Eigenfrequenz, auf deren Kehrwert der zeitliche Abstand zwischen dem Beginn des ersten Schaltimpulses und dem Beginn des weiteren Schaltimpulses abgestimmt ist, kann beispielsweise die niedrigste Eigenfrequenz des mechanischen Systems sein.

Ferner kann die Eigenfrequenz, auf deren Kehrwert der zeitliche Abstand zwischen dem Beginn des ersten Schaltimpulses und dem Beginn des weiteren Schaltimpulses abgestimmt ist, zum Beispiel die dominante Eigenfrequenz des mechanischen Systems sein - also diejenige Eigenfrequenz, welche die höchste Resonanzüberhöhung aufweist. Anders ausgedrückt, der zeitliche Abstand zwischen dem Beginn des ersten Schaltimpulses und dem Beginn des weiteren Schaltimpulses kann auf diejenige Eigenperiodendauer des mechanischen Systems abgestimmt sein, deren Kehrwert der dominanten Eigenfrequenz des mechanischen Systems entspricht. Die dominante Eigenfrequenz des mechanischen Systems kann insbesondere zugleich die niedrigste Eigenfrequenz des mechanischen Systems sein.

Durch das Steuerventil kann die Beaufschlagung der Antriebseinheit mit dem Medium gesteuert werden. Mit anderen Worten, mithilfe des Steuerventils kann gesteuert werden, welcher Mediumdruck in der Antriebseinheit herrscht.

Vorteilhafterweise ist das Steuerventil elektrisch, insbesondere elektromagnetisch, steuerbar. Weiter ist es bevorzugt, wenn eine Schaltstellung des Steuerventils durch das Steuersignal gesteuert bzw. vorgegeben wird. Das Steuersignal ist zweckmäßigerweise ein elektrisches Steuersignal, insbesondere ein digitales elektrisches Steuersignal.

Wird das Steuerventil geöffnet, so wird vorzugsweise ein Hineinströmen des Mediums in die Antriebseinheit oder ein Herausströmen des Mediums aus der Antriebseinheit bewirkt. Dies wiederum bewirkt zweckmäßigerweise die Antriebsbewegung der Antriebseinheit. Wird das Steuerventil wieder geschlossen, wird diese Antriebsbewegung vorzugsweise gestoppt.

Die Antriebsbewegung der Antriebseinheit wird vorteilhafterweise in die Bewegung des beweglich gelagerten Körpers überführt. In bevorzugter Weise wird die Bewegung des beweglich gelagerten Körpers derart gesteuert, dass der beweglich gelagerte Körper einer vorgegebenen Trajektorie folgt.

Des Weiteren kann die Antriebseinheit mittelbar, zum Beispiel über einen Schwenkarm, oder unmittelbar mit dem beweglich gelagerten Körper verbunden sein.

Dass die Steuereinheit dazu eingerichtet ist, besagtes Steuersignal zur Ansteuerung des Steuerventils zu erzeugen, kann unter anderem einschließen, dass die Steuereinheit dazu programmiert ist, das Steuersignal zu erzeugen und gegebenenfalls an das Steuerventil weiterzuleiten. Vorteilhafterweise ist die Steuereinheit mit dem Steuerventil verbunden, insbesondere über eine Signalübertragungsleitung, wie zum Beispiel einen Feldbus.

Die Ermittlung der Eigenperiodendauer bzw. Eigenfrequenz des mechanischen Systems kann anhand einer dem Fachmann bekannten Methode erfolgen.

Zum Beispiel kann die Eigenperiodendauer rechnerisch ermittelt werden, insbesondere anhand der Abmessungen und Massen der einzelnen Elemente des mechanischen Systems sowie gegebenenfalls anhand weiterer Parameter des mechanischen Systems. Unter anderem kann die rechnerische Ermittlung der Eigenperiodendauer mithilfe einer numerischen Simulation erfolgen. Ferner kann die Eigenperiodendauer bzw. Eigenfrequenz in besagter Steuereinheit hinterlegt sein/werden.

Weiterhin kann vorgesehen sein, dass die Eigenperiodendauer anhand einer oder mehrerer Messungen ermittelt wird. In diesem Fall ist es vorteilhaft, wenn das mechanische System zum Zwecke der Messung der Eigenperiodendauer bewusst zu Schwingungen angeregt wird. Vorzugsweise führt die Anregung des mechanischen Systems dazu, dass das mechanische System mit seiner Eigenfrequenz bzw. seinen Eigenfrequenzen schwingt. Die Anregung des mechanischen Systems kann beispielsweise eine impulsartige, eine sinusförmige oder eine breitbandige Anregung sein.

Zum Beispiel kann das mechanische System dadurch zu Schwingungen mit seiner Eigenfrequenz bzw. seinen Eigenfrequenzen angeregt werden, dass das Steuerventil für eine vorgegebene Dauer geöffnet und anschließend wieder geschlossen wird. Insbesondere kann die Anregung durch ein schnellstmögliches Öffnen und Schließen des Steuerventils erfolgen.

Weiter kann mithilfe eines oder mehrerer Sensoren, wie zum Beispiel eines Beschleunigungssensors, eines Laser-Vibrometers, eines Positionssensors und/oder eines Drucksensors, die Schwingungsbewegung des mechanischen Systems erfasst werden. Anhand der dabei gewonnenen Messwerte kann die Übertragungsfunktion des mechanischen Systems ermittelt werden. Im Falle mehrerer Sensoren können die Sensoren die Schwingungsbewegung des mechanischen Systems insbesondere an unterschiedlichen Stellen erfassen.

Aus der Übertragungsfunktion des mechanischen Systems kann die Eigenfrequenz bzw. Eigenperiodendauer, auf welche der zeitliche Abstand zwischen dem ersten und dem weiteren Schaltimpuls abzustimmen ist, ermittelt werden, beispielsweise anhand einer Fourier-Analyse, insbesondere unter Verwendung eines Fast Fourier Transform Algorithmus.

Die Eigenperiodendauer kann ein zeitlich konstanter Wert sein. Alternativ ist es möglich, dass die Eigenperiodendauer sich mit der Zeit verändert. Zum Beispiel kann die Eigenperiodendauer von einem Betriebszustand und/oder einer Betriebsdauer des mechanischen Systems abhängig sein. In dem Fall, dass die Eigenperiodendauer zeitlich veränderlich ist, ist es vorteilhaft, wenn die Eigenperiodendauer während des Betriebs des mechanischen Systems wiederholt, insbesondere zyklisch, ermittelt wird.

Der beweglich gelagerte Körper kann unter anderem linear verschiebbar gelagert sein. Des Weiteren kann der beweglich gelagerte Körper dreh-/schwenkbar gelagert sein. Die Bewegung des beweglich gelagerten Körpers kann eine lineare Bewegung, eine Dreh-/Schwenkbewegung, insbesondere um eine seiner Körperachsen oder um eine nicht durch den Körper verlaufende Rotationsachse, oder eine Überlagerung einer linearen Bewegung und einer Dreh-/Schwenkbewegung sein.

Außerdem kann das mechanische System einen oder mehrere Schwenkarme aufweisen, an welchem/welchen der beweglich gelagerte Körper befestigt ist.

Das mechanische System kann insbesondere ein hydromechanisches System sein. In bevorzugter Weise ist das Medium, mit dem die Antriebseinheit betrieben wird, eine Flüssigkeit, insbesondere Öl.

Die Antriebseinheit kann insbesondere als lineare Antriebseinheit, beispielsweise als Hydraulikzylinder, ausgebildet sein. Entsprechend kann die Antriebsbewegung der Antriebseinheit eine lineare bzw. translatorische Antriebsbewegung sein.

Alternativ kann die Antriebseinheit als rotatorische Antriebseinheit, insbesondere als Hydraulikmotor, ausgebildet sein. In diesem Fall ist die Antriebsbewegung der Antriebseinheit zweckmäßigerweise eine rotatorische Antriebsbewegung.

Des Weiteren ist es bevorzugt, wenn die Antriebseinheit ein bewegliches Antriebselement, beispielsweise einen Rotor oder einen verschiebbar gelagerten Kolben, aufweist. Sinnvollerweise führt das bewegliche Antriebselement der Antriebseinheit besagte Antriebsbewegung der Antriebseinheit aus.

Das besagte Steuerventil, mit dem die Antriebsbewegung der Antriebseinheit gesteuert wird, kann beispielsweise ein Stetigventil, insbesondere ein Servoventil, oder ein Schaltventil, also ein diskret schaltendes (auf/zu) Ventil, sein.

Gemäß einer vorteilhaften Weiterbildung der Erfindung ist das Steuerventil ein Digitalventil, auch digitales Hydraulikventil oder Digitalhydraulikventil genannt. Da Digitalventile kurze Schaltzeiten aufweisen (üblicherweise im Millisekunden-Bereich), lassen sich im Falle einer solchen Ausgestaltung des Steuerventils schnelle Schaltvorgänge realisieren. Ferner kann im Falle einer solchen Ausgestaltung des Steuerventils der Mediumfluss durch das Steuerventil präzise vorgegeben werden. Ein weiterer Vorteil eines Digitalventils ist, dass ein Digitalventil typischerweise unempfindlicher gegen Ölunreinheiten ist als herkömmliche Stetigventile.

Vorzugsweise ist der zeitliche Abstand zwischen dem Beginn des ersten Schaltimpulses und dem Beginn des weiteren Schaltimpulses eine lineare Funktion besagter Eigenperiodendauer. Der zeitliche Abstand zwischen dem Beginn des ersten Schaltimpulses und dem Beginn des weiteren Schaltimpulses kann insbesondere proportional zur Eigenperiodendauer sein.

Gemäß einer bevorzugten Ausführung der Erfindung beträgt der zeitliche Abstand zwischen dem Beginn des ersten Schaltimpulses und dem Beginn des weiteren Schaltimpulses mindestens die Hälfte besagter Eigenperiodendauer.

Insbesondere falls das Steuerventil eine Schaltzeit aufweist, die größer ist als ein Sechstel der Eigenperiodendauer, kann der zeitliche Abstand zwischen dem Beginn des ersten Schaltimpulses und dem Beginn des weiteren Schaltimpulses eine Funktion dieser Schaltzeit, vorzugsweise eine lineare Funktion dieser Schaltzeit, sein. Bei der Schaltzeit kann es sich um die Öffnungszeit oder um die Schließzeit des Steuerventils handeln. Vorzugsweise sind die Öffnungs- und die Schließzeit des Steuerventils gleich.

Besonders bevorzugt ist es, wenn die Öffnungs- und Schließzeit des Steuerventils kleiner ist als ein Sechstel der Eigenperiodendauer. In diesem Fall können die Impulsdauern der Schaltimpulse und/oder deren zeitlicher Abstand von der Öffnungs- und Schließzeit des Steuerventils unabhängig sein.

Ferner sind die Impulsdauer des ersten Schaltimpulses und die Impulsdauer des weiteren Schaltimpulses vorzugsweise auf besagte Eigenperiodendauer abgestimmt. Beispielsweise können die Impulsdauer des ersten Schaltimpulses und die Impulsdauer des weiteren Schaltimpulses jeweils eine lineare Funktion der Eigenperiodendauer sein. Insbesondere können die Impulsdauer des ersten Schaltimpulses und die Impulsdauer des weiteren Schaltimpulses jeweils proportional zur Eigenperiodendauer sein.

Des Weiteren können, insbesondere falls das Steuerventil eine Schaltzeit aufweist, die größer ist als ein Sechstel der Eigenperiodendauer, die Impulsdauer des ersten Schaltimpulses und die Impulsdauer des weiteren Schaltimpulses jeweils eine lineare Funktion dieser Schaltzeit sein.

Falls das Steuerventil eine Schaltzeit aufweist, die größer ist als ein Sechstel der Eigenperiodendauer, können die Impulsdauer des ersten und des weiteren Schaltimpulses zum Beispiel gleich dem arithmetischen Mittel aus der Schaltzeit und einem Sechstel der Eigenperiodendauer sein. Andernfalls können die Impulsdauer des ersten Schaltimpulses und die Impulsdauer des weiteren Schaltimpulses beispielsweise gleich einem Sechstel der Eigenperiodendauer sein.

Vorzugsweise bewirken die beiden Schaltimpulse, dass sich das bewegliche Antriebselement der Antriebseinheit um eine vorgegebene Schrittweite bewegt. Die vorgegebene Schrittweite kann beispielsweise ein (Dreh-)Winkel oder eine (Verfahr-)Strecke sein.

Ferner ist die vorgegebene Schrittweite vorteilhafterweise eine lineare Funktion besagter Eigenperiodendauer. Wenn eine Schaltzeit des Steuerventils größer ist als ein Sechstel der Eigenperiodendauer, ist die vorgegebene Schrittweite vorzugsweise proportional zum arithmetischen Mittel aus der Schaltzeit des Steuerventils und einem Sechstel der Eigenperiodendauer. Andernfalls ist die vorgegebene Schrittweite vorzugsweise proportional zur Eigenperiodendauer.

Darüber hinaus kann das Steuersignal zwischen dem ersten und dem weiteren Schaltimpuls einen zusätzlichen Schaltimpuls mit einer vorgegebenen Impulsdauer aufweisen. Das Steuersignal kann den zusätzlichen Schaltimpuls insbesondere dann aufweisen, wenn ein Sollwert eines Bewegungsparameters der Antriebseinheit größer ist als die vorgegebene Schrittweite, die durch den ersten und den weiteren Schaltimpuls bewirkt wird.

Die Impulsdauer dieses zusätzlichen Schaltimpulses ist vorzugsweise von dem Sollwert des Bewegungsparameters abhängig. Besonders bevorzugt ist es, wenn die Impulsdauer des zusätzlichen Schaltimpulses eine lineare Funktion des Sollwerts des Bewegungsparameters ist. Der zeitliche Abstand zwischen dem Beginn des ersten Schaltimpulses und dem Beginn des weiteren Schaltimpulses hängt vorzugsweise von der Impulsdauer des gegebenenfalls vorhandenen zusätzlichen Schaltimpulses ab.

Wenn die vorgegebene Schrittweite gleich dem Sollwert des Bewegungsparameters ist, weist das Steuersignal vorzugsweise keinen solchen zusätzlichen Schaltimpuls auf.

Jeder der Schaltimpulse bewirkt vorzugsweise, dass das Steuerventil geöffnet wird. Das heißt, während jedes der Schaltimpulse ist das Steuerventil vorzugsweise geöffnet. Zwischen dem ersten und dem zusätzlichen Schaltimpuls, zwischen dem zusätzlichen und dem weiteren Schaltimpuls und nach dem weiteren Schaltimpuls ist das Steuerventil in bevorzugter Weise geschlossen.

Falls das Steuersignal nur den ersten und den weiteren Schaltimpuls aufweist, wird das bewegliche Antriebselement der Antriebseinheit vorzugsweise um die vorgegebene Schrittweite bewegt. Weist das Steuersignal hingegen alle drei zuvor erwähnten Schaltimpulse auf, wird das bewegliche Antriebselement vorzugsweise um den Sollwert des Bewegungsparameters bewegt. Mithilfe des zusätzlichen Schaltimpulses lässt sich ein Verfahrweg bzw. Drehwinkel des beweglichen Antriebselements der Antriebseinheit realisieren, welcher größer ist als die vorgegebene Schrittweite.

In dem Fall, dass die Antriebseinheit eine lineare Antriebseinheit ist, kann der besagte Bewegungsparameter zum Beispiel ein linearer Verfahrweg sein. Der Sollwert des Bewegungsparameters kann also beispielsweise ein von der Antriebseinheit, genauer gesagt von deren beweglichem Antriebselement, zurückzulegender Verfahrweg sein. Mit anderen Worten, die Impulsdauer des zusätzlichen Schaltimpulses kann davon abhängen, welchen Verfahrweg die Antriebseinheit bzw. deren bewegliches Antriebselement bei der Antriebsbewegung zurücklegen soll.

In dem Fall, dass die Antriebseinheit eine rotatorische Antriebseinheit ist, kann der besagte Bewegungsparameter zum Beispiel ein Drehwinkel sein. Der Sollwert des Bewegungsparameters kann also beispielsweise ein von der Antriebseinheit, genauer gesagt von deren beweglichem Antriebselement, zurückzulegender Drehwinkel sein. Das heißt, die Impulsdauer des zusätzlichen Schaltimpulses kann davon abhängen, um welchen Drehwinkel die Antriebseinheit bzw. deren bewegliches Antriebselement bei der Antriebsbewegung gedreht werden soll.

Ein zeitlicher Abstand zwischen dem Beginn des ersten Schaltimpulses und dem Beginn des zusätzlichen Schaltimpulses ist vorzugsweise eine lineare Funktion der Eigenperiodendauer.

Falls das Steuerventil eine Schaltzeit aufweist, die größer ist als ein Sechstel der Eigenperiodendauer, kann der zeitliche Abstand zwischen dem Beginn des ersten Schaltimpulses und dem Beginn des zusätzlichen Schaltimpulses zum Beispiel dem arithmetischen Mittel aus dem Doppelten der Schaltzeit und einem Drittel der Eigenperiodendauer sein. Andernfalls kann der zeitliche Abstand zwischen dem Beginn des ersten Schaltimpulses und dem Beginn des zusätzlichen Schaltimpulses beispielsweise gleich einem Drittel der Eigenperiodendauer sein.

In bevorzugter Weise sind der erste und der zusätzliche Schaltimpuls durch eine erste Pause mit einer vorgegebenen Pausendauer voneinander getrennt. Zudem sind der zusätzliche und der weitere Schaltimpuls vorzugsweise durch eine zweite Pause mit einer vorgegebenen Pausendauer voneinander getrennt. Die Pausendauer der ersten Pause und die Pausendauer der zweiten Pause können jeweils eine lineare Funktion der Eigenperiodendauer sein. Während der jeweiligen Pause ist das Steuerventil zweckmäßigerweise geschlossen.

Die Pausendauer der ersten Pause kann insbesondere gleich der Pausendauer der zweiten Pause sein. Ferner können die Pausendauer der ersten Pause und die Pausendauer der zweiten Pause beispielsweise gleich der Impulsdauer des ersten Schaltimpulses sein.

Falls das Steuerventil eine Schaltzeit aufweist, die größer ist als ein Sechstel der Eigenperiodendauer, kann die jeweilige Pausendauer zum Beispiel gleich dem arithmetischen Mittel aus der Schaltzeit und einem Sechstel der Eigenperiodendauer sein. Andernfalls kann die jeweilige Pausendauer beispielsweise gleich einem Sechstel der Eigenperiodendauer sein.

Die Schaltimpulse des Steuersignals können insbesondere Rechteckimpulse sein, also Schaltimpulse mit einer zumindest im Wesentlichen rechteckigen Form. Grundsätzlich können einer oder mehrere der Schaltimpulse des Steuersignals eine andere Pulsform aufweisen.

Des Weiteren kann das Steuerventil durch das Steuersignal "ballistisch" angesteuert werden. Unter einer ballistischen Ansteuerung des Steuerventils kann vorliegend eine Ansteuerung verstanden werden, bei welcher einer oder mehrere der Schaltimpulse des Steuersignals so kurz sind, dass durch die impulsartige Betätigung des Steuerventils dessen Absperrkörper in Öffnungsrichtung gestoßen wird, ohne dass der Absperrkörper seine Endlage bei voller Öffnung des Steuerventils erreicht, und der Absperrkörper anschließend unter Einwirkung einer Ventilfeder des Steuerventils und/oder unter Einwirkung von Strömungskräften wieder in Richtung seiner geschlossenen Endlage zurück fällt. Bei der ballistischen Ansteuerung des Steuerventils können/kann der erste und/oder der weitere Schaltimpuls eine Impulsdauer aufweisen, die kleiner ist als die Schaltzeit des Steuerventils.

Vorzugsweise wird das Steuerventil "ballistisch" angesteuert, falls das Steuerventil eine Schaltzeit aufweist, die größer ist als ein Sechstel der Eigenperiodendauer. Eine ballistische Ansteuerung des Steuerventils kann jedoch auch dann erfolgen, wenn die Schaltzeit des Steuerventils kleiner ist als ein Sechstel der Eigenperiodendauer, insbesondere um besonders kleine Schrittweiten des Antriebselements zu realisieren.

Der zeitliche Abstand zwischen dem ersten und dem weiteren Schaltimpuls ist durch die Eigenperiodendauer bedingt. Sollen unerwünschte Schwingungen im mechanischen System vermieden oder zumindest reduziert werden, so ist, wie zuvor erwähnt, der zeitliche Abstand zwischen dem ersten und dem weiteren Schaltimpuls auf die Eigenperiodendauer abzustimmen. Andernfalls, d. h. bei einer willkürlichen Wahl des zeitlichen Abstands zwischen dem ersten und dem weiteren Schaltimpuls, kann es zum (Nach-)Schwingen des beweglich gelagerten Körpers mit großer Schwingungsamplitude kommen.

In der Praxis kann das reale Verhalten eines Steuerventils vom "idealen Verhalten" (verzögerungsfreies Ein- und Ausschalten) abweichen. Insbesondere können Totzeiten und/oder unterschiedliche Schaltzeiten beim Öffnen und Schließen des Steuerventils auftreten. Solche Abweichungen vom idealen Verhalten können durch Adaption der Schaltzeitpunkte kompensiert werden. Eine solche Adaption kann manuell oder mithilfe teil- oder vollautomatisierter Algorithmen, wie zum Beispiel einer "iterative learning control", erfolgen.

Das erfindungsgemäße Verfahren kann unter anderem in einem Walzwerk zum Einsatz kommen. Das mechanische System kann dabei eine Walzwerksvorrichtung oder eine Baueinheit einer Walzwerksvorrichtung sein.

Bei einer vorteilhaften Weiterbildung der Erfindung ist der beweglich gelagerte Körper eine Andrückrolle einer Haspelanlage. Das erfindungsgemäße Verfahren kann also insbesondere zum Steuern der Bewegung einer Andrückrolle eingesetzt werden. In diesem Fall ist die Antriebseinheit vorzugsweise ein Hydraulikzylinder. Weiter ist es bevorzugt, wenn das mechanische System mindestens einen Schwenkarm umfasst, an welchem die Andrückrolle befestigt ist. Die Haspelanlage wird vorzugsweise dazu genutzt, ein Metallband zu einem Bund (in Fachkreisen auch Coil genannt) aufzuwickeln.

Vorzugsweise wird die Andrückrolle mithilfe der Antriebseinheit während eines Aufwickelvorgangs des Metallbands, bei dem das Metallband auf einen Haspeldorn aufgewickelt wird, gegen das Metallband gedrückt. Auf diese Weise lässt sich das Metallband sicher um den Haspeldorn führen.

Weiter ist es vorteilhaft, wenn die Andrückrolle durch die Antriebsbewegung der Antriebseinheit zumindest während einer Phase des Aufwickelvorgangs, insbesondere während einer Anfangsphase des Aufwickelvorgangs, derart bewegt wird, dass jeweils dann, wenn ein auf dem Haspeldorn aufliegender Bandanfang des Metallbands zwischen der Andrückrolle und dem Haspeldorn hindurchläuft, die Andrückrolle vom Metallband beabstandet ist. Auf diese Weise lässt sich ein Eindrücken der inneren Wicklungen des Metallbands gegen den Bandanfang durch die Andrückrolle vermeiden.

Als Bandanfang kann diejenige Querkante des Metallbands aufgefasst werden, welche das innere Ende des Coils ausbildet. Unter einer Querkante des Metallbands wiederum kann eine senkrecht zur Längsrichtung des Metallbands bzw. senkrecht zu dessen Längskanten ausgerichtete Kante aufgefasst werden.

Jeweils eine vorgegebene Zeitdauer vor einem Zeitpunkt, bei dem sich der Bandanfang des Metallbands zwischen der Andrückrolle und dem Haspeldorn, genauer gesagt zwischen deren Drehachsen, befindet, wird die Andrückrolle vorteilhafterweise mithilfe der Antriebseinheit vom Metallband entfernt. Dies wird auch als "Abheben der Andrückrolle" bezeichnet. Die vorgegebene Zeitdauer hängt vorteilhafterweise von einer Rotationsgeschwindigkeit des Haspeldorns ab.

Jeweils eine vorgegebene Zeitdauer nach dem Zeitpunkt, bei dem sich der Bandanfang des Metallbands zwischen der Andrückrolle und dem Haspeldorn, genauer gesagt zwischen deren Drehachsen, befindet, wird die Andrückrolle vorteilhafterweise mithilfe der Antriebseinheit wieder gegen das Metallband gedrückt. Dies wird auch als "Aufsetzen der Andrückrolle" bezeichnet. Auch diese vorgegebene Zeitdauer hängt vorteilhafterweise von der Rotationsgeschwindigkeit des Haspeldorns ab.

Die zuvor beschriebene Art der Bewegung der Andrückrolle wird in Fachkreisen auch als "step control" bezeichnet, was darauf zurückgeht, dass sich die Andrückrolle dabei, bildlich gesprochen, stufenförmig bewegt.

Insbesondere bei hohen Aufwickelgeschwindigkeiten kann bei der "step control" ein schnelles Abheben bzw. Aufsetzen der Andrückrolle erforderlich sein. Zudem ist es vorteilhaft, wenn bei der "step control" Schwingungen der Andrückrolle möglichst vermieden werden, um ein Eindrücken der inneren Wicklungen des Coils gegen den Bandanfang sicher zu vermeiden. Das schnelle Abheben und Aufsetzen der Andrückrolle sowie die Reduktion von Schwingungen der Andrückrolle lässt sich durch die Ansteuerung des Steuerventils mit besagtem Steuersignal erreichen.

Die Haspelanlage umfasst vorzugsweise mehrere, insbesondere drei oder vier, solche Andrückrollen. In bevorzugter Weise werden alle Andrückrollen der Haspelanlage in der beschriebenen Art und Weise gesteuert. Insbesondere kann die Steuerung der Andrückrollen unter der Randbedingung erfolgen, dass nach dem Aufwickeln der ersten Wicklung des Metallbands maximal eine der Andrückrollen während besagter Phase des Aufwickelvorgangs vom Metallband abgehoben ist.

In einer anderen vorteilhaften Ausgestaltung der Erfindung ist der beweglich gelagerte Körper eine Schlingenheberrolle. Alternativ kann der beweglich gelagerte Körper beispielsweise eine Walze sein. Das erfindungsgemäße Verfahren kann also insbesondere zum Steuern der Bewegung einer Walze oder einer Schlingerheberrolle eingesetzt werden.

Weiter kann vorgesehen sein, dass mithilfe eines Sensors, welcher insbesondere ein Element des mechanischen Systems sein kann, ein Zustandsparameter der Antriebseinheit gemessen wird. Bei dem Zustandsparameter kann es sich zum Beispiel um eine Position des beweglichen Antriebselements der Antriebseinheit, einen auf das Antriebselement wirkenden Druck oder eine auf das Antriebselement wirkende Kraft handeln. Entsprechend kann der Sensor beispielsweise ein Positionssensor, ein Drucksensor oder ein Kraftsensor sein.

Dieser Sensor ist vorzugsweise über eine Signalübertragungsleitung mit der zuvor erwähnten Steuereinheit verbunden. Ferner kann die Steuereinheit dazu programmiert sein, die Impulsdauer des zusätzlichen Schaltimpulses in Abhängigkeit von einem gemessenen Wert des Zustandsparameters der Antriebseinheit einzustellen. Das heißt, die Impulsdauer des zusätzlichen Schaltimpulses kann eine Funktion des besagten Zustandsparameters der Antriebseinheit sein.

Weiterhin können "einfache Bewegungen" des beweglich gelagerten Körpers - also solche Bewegungen, bei denen Schwingungen des beweglich gelagerten Körpers unkritisch sind - mithilfe des besagten Steuerventils oder mithilfe eines anderen Steuerventils realisiert werden. Eine solche "einfache Bewegung" kann im Falle einer Andrückrolle zum Beispiel ein Ein- oder Ausschwenken der Andrückrolle sein.

Das andere Steuerventil, das zur Realisierung solcher "einfachen Bewegungen" eingesetzt werden kann, kann beispielsweise ein Stetigventil, insbesondere ein herkömmliches Proportionalventil oder Servoventil, sein. Ferner kann es sich bei dem anderen Steuerventil um ein Digitalventil handeln. Das erstgenannte Steuerventil bzw. das andere Steuerventil kann zur Realisierung "einfacher Bewegungen" beispielsweise mit einer PWM-Ansteuerung (PWM = Pulse Width Modulation) angesteuert werden.

Vorteilhafterweise umfasst das mechanische System eine Druckquelle. Die Druckquelle dient zweckmäßigerweise dazu, das zum Betreiben der Antriebseinheit verwendete Medium mit einem vorgegebenen Druckniveau bereitzustellen.

Weiter umfasst das mechanische System vorteilhafterweise eine erste Leitung, über welche das Steuerventil mit der Druckquelle verbunden ist. Ferner ist es vorteilhaft, wenn das mechanische System eine zweite Leitung umfasst, über welche das Steuerventil mit der Antriebseinheit verbunden ist.

Die Druckquelle kann zum Beispiel ein Tank sein, in welchem das Medium gespeichert ist. Alternativ kann die Druckquelle zum Beispiel eine Pumpe sein. In letztgenanntem Fall ist die Antriebseinheit zweckmäßigerweise über die Leitungen an die Druckseite der Pumpe angeschlossen.

Darüber hinaus ist es vorteilhaft, wenn das mechanische System einen Druckspeicher aufweist, welcher an eine der beiden Leitungen angeschlossen ist. Mithilfe des Druckspeichers kann vermieden werden, dass bei einem Schaltvorgang des Steuerventils Druckspitzen und/oder Kavitation im mechanischen System, insbesondere in dessen Leitungen, auftreten. Der Druckspeicher kann insbesondere bei einem plötzlichen Druckanstieg in einer der Leitungen eine gewisse Menge des Mediums aus den Leitungen aufnehmen bzw. bei einem plötzlichen Druckabfall in einer der Leitungen eine gewisse Menge des Mediums in die Leitungen einbringen.

Vorzugsweise ist der Druckspeicher teilweise mit einem Gas gefüllt. Da Gase im Allgemeinen leichter komprimierbar sind als Flüssigkeiten, kann der Druckspeicher auf diese Weise besonders schnell auf Druckschwankungen reagieren.

Ferner ist es vorteilhaft, wenn das mechanische System eine Drucksenke aufweist. Die Drucksenke dient zweckmäßigerweise dazu, das Medium aus der Antriebseinheit aufzunehmen. Vorteilhafterweise ist die Antriebseinheit über eine oder mehrere weitere Leitungen mit der Drucksenke verbunden, wobei die weitere/-n Leitung/-en insbesondere vorgespannt sein kann/können.

Bei der Drucksenke kann es sich zum Beispiel um einen Tank handeln, an dessen Eingang vorzugsweise ein niedrigerer Druck herrscht als an einem Ausgang der Druckquelle. Alternativ kann die Drucksenke eine Pumpe sein. In letztgenanntem Fall ist die Antriebseinheit zweckmäßigerweise über die weitere Leitung bzw. die weiteren Leitungen an die Saugseite dieser Pumpe angeschlossen.

Weiterhin kann das mechanische System zusätzlich zu dem erstgenannten Steuerventil ein weiteres Steuerventil zum Steuern der Antriebsbewegung der Antriebseinheit aufweisen, das parallel zu dem erstgenannten Steuerventil geschaltet ist. Auf diese Weise lässt sich ein höherer Mediumfluss von der Druckquelle zu der Antriebseinheit und/oder von der Antriebseinheit zu der Drucksenke realisieren. Diese beiden Steuerventile können insbesondere baugleich ausgeführt sein. Alternativ können das erstgenannte Steuerventil und das weitere Steuerventil zum Steuern der Antriebsbewegung der Antriebseinheit unterschiedliche Ventile sein. In letztgenanntem Fall können diese beiden Ventile dazu genutzt werden, unterschiedliche Verfahrwege bzw. Drehwinkel des Antriebselements zu realisieren.

Ferner können diese beiden Steuerventile abwechselnd geschaltet werden. Auf diese Weise kann die effektive Schaltfrequenz der Parallelschaltung der Steuerventile - verglichen mit der effektiven Schaltfrequenz der Parallelschaltung bei gleichzeitigem Schalten der Steuerventile - erhöht werden. Grundsätzlich kann das mechanische System mehrere solche Parallelschaltungen von Steuerventilen zum Steuern der Antriebsbewegung der Antriebseinheit umfassen.

Die bisher gegebene Beschreibung vorteilhafter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen mechanischen System kombinierbar. Ferner können Verfahrensmerkmale auch als Eigenschaft der entsprechenden Vorrichtungseinheit gesehen werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

FIG 1     ein mechanisches System, das einen Hydraulikzylinder mit einem Antriebskolben, einen verschiebbar gelagerten Körper, mehrere Steuerventile und eine Steuereinheit umfasst;

FIG 2     eine exemplarische Übertragungsfunktion des mechanischen Systems aus FIG 1;

FIG 3-5   mehrere Diagramme, in denen unterschiedliche Steuerventilsteuersignale als Funktion der Zeit sowie zugehörige zeitliche Verläufe einer Position und Geschwindigkeit des Antriebskolbens dargestellt sind;

FIG 6     drei Diagramme, in denen eine Ventilkolbenposition als Funktion der Zeit sowie zugehörige zeitliche Verläufe einer Position und Geschwindigkeit des Antriebskolbens bei einer ballistischen Ventilansteuerung dargestellt sind;

FIG 7      eine Haspelanlage zum Aufwickeln eines Metallbands, die drei mechanische Systeme mit jeweils einer Andrückrolle und einem Hydraulikzylinder umfasst; und

FIG 8      ein weiteres mechanisches System, welches einen Hydraulikmotor, einen rotierbar gelagerten Körper, ein Steuerventil und eine Steuereinheit aufweist.

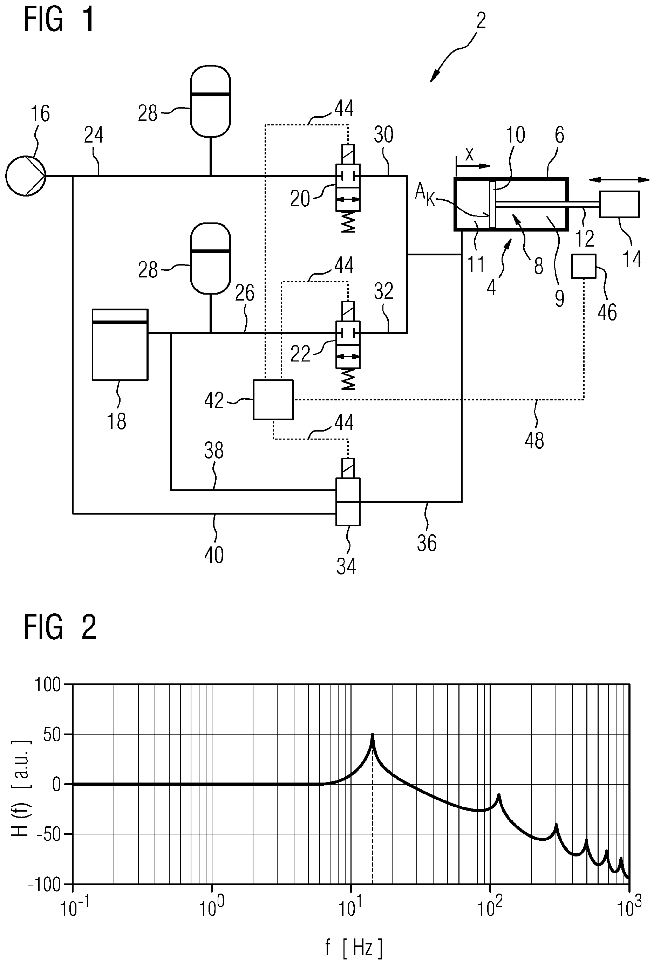

FIG 1 zeigt eine schematische Darstellung eines mechanischen Systems 2.

Das mechanische System 2 umfasst unter anderem eine mit einem Medium, insbesondere mit Öl, betreibbare Antriebseinheit 4. Im vorliegenden Ausführungsbeispiel ist die Antriebseinheit 4 als Hydraulikzylinder ausgebildet.

Die Antriebseinheit 4 umfasst ein Gehäuse 6. Zudem weist die Antriebseinheit 4 einen linear verschiebbaren Antriebskolben 8 als bewegliches Antriebselement auf, wobei der Antriebskolben 8 einen Kolbenkopf 10 sowie eine mit dem Kolbenkopf 10 verbundene Kolbenstange 12 umfasst.

Ferner umfasst das mechanische System 2 einen beweglich gelagerten Körper 14, der durch die Antriebseinheit 4 angetrieben wird, wobei der beweglich gelagerte Körper 14 mit dem Antriebskolben 8, genauer gesagt mit der Kolbenstange 12, verbunden ist. Im vorliegenden Beispiel ist der beweglich gelagerte Körper 14 linear verschiebbar gelagert.

Weiter weist das mechanische System 2 eine Druckquelle 16 sowie eine Drucksenke 18 auf. Die Druckquelle 16 ist im vorliegenden Beispiel eine Pumpe, die an ihrem Ausgang das zuvor erwähnte Medium mit einem Druck von typischerweise circa 300 bar bereitstellt.

Außerdem umfasst das mechanische System 2 ein erstes Steuerventil 20, welches als Digitalventil ausgebildet ist, sowie ein zweites Steuerventil 22, welches ebenfalls als Digitalventil ausgebildet ist. Im vorliegenden Ausführungsbeispiel sind das erste und zweite Steuerventil 20, 22 baugleich ausgeführt und sind daher in ihrer Schaltzeit $t_S$ identisch. Als Schließzeit $t_S$ wird hier die Öffnungszeit des jeweiligen Steuerventils 20, 22 bezeichnet, welche zugleich dessen Schließzeit entspricht. Es wird also davon ausgegangen, dass bei den Steuerventilen 20, 22 die Öffnungszeit mit der Schließzeit übereinstimmt.

Darüber hinaus umfasst das mechanische System 2 eine erste Fluidleitung 24, über welche das erste Steuerventil 20 mit der Druckquelle 16 verbunden ist, sowie eine zweite Fluidleitung 26, über welche das zweite Steuerventil 22 mit der Drucksenke 18 verbunden ist.

Die zuvor erwähnte Drucksenke 18 ist im vorliegenden Beispiel ein Tank, welcher derart vorgespannt ist, dass in der zweiten Fluidleitung 26 am zweiten Steuerventil 22 ein Druck von typischerweise circa 20 bar herrscht.

Außerdem weist das mechanische System 2 zwei teilweise mit einem Gas gefüllte Druckspeicher 28 auf, von denen einer an die erste Fluidleitung 24 angeschlossen ist und der andere an die zweite Fluidleitung 26 angeschlossen ist. Mittels dieser beiden Druckspeicher 28 lassen sich Druckspitzen und/oder Kavitation bei Schaltvorgängen der Steuerventile 20, 22 vermeiden.

Des Weiteren ist das erste Steuerventil 20 über eine dritte Fluidleitung 30 des mechanischen Systems 2 an die sogenannte Kolbenseite der Antriebseinheit 4 angeschlossen. Das zweite Steuerventil 22 ist über eine vierte Fluidleitung 32 des mechanischen Systems 2 ebenfalls an die Kolbenseite der Antriebseinheit 4 angeschlossen.

Außerdem weist das mechanische System 2 ein weiteres Steuerventil 34 auf, welches als Stetigventil, insbesondere als Mehrwegeventil, ausgebildet ist. Das weitere Steuerventil 34 ist über eine fünfte Fluidleitung 36 des mechanischen Systems 2 ebenfalls an die Kolbenseite der Antriebseinheit 4 angeschlossen. Ferner ist das weitere Steuerventil 34 über eine sechste Fluidleitung 38 des mechanischen Systems 2 mit der Drucksenke 18 verbunden. Über eine siebte Fluidleitung 40 des mechanischen Systems 2 ist das weitere Steuerventil 34 mit der Druckquelle 16 verbunden.

Jedes der drei Steuerventile 20, 22, 34 weist einen elektromagnetisch gesteuerten Ventilkolben als Absperrkörper sowie eine Ventilfeder auf.

Das weitere Steuerventil 34 weist eine Schaltstellung auf, bei der das Medium von der Antriebseinheit 4 zu der Drucksenke 18 strömen kann. Außerdem weist das weitere Steuerventil 34 eine Schaltstellung auf, bei das Medium von der Druckquelle 16 zu der Antriebseinheit 4 strömen kann. Zudem weist das weitere Steuerventil 34 eine Schaltstellung auf, bei der ein Mediumfluss durch das weitere Steuerventil 34 unterbunden wird.

Ferner ist das mechanische System 2 mit einer Steuereinheit 42 zum Steuern der Steuerventile 20, 22, 34 ausgestattet, die mit jedem der drei Steuerventile 20, 22, 34 jeweils über eine Signalübertragungsleitung 44 verbunden ist. Von der Steuereinheit 42 wird die Ventilstellung des jeweiligen Steuerventils 20, 22, 34 gesteuert. Zu diesem Zwecke erzeugt die Steuereinheit 42 elektrische Steuersignale für die Steuerventile 20, 22, 34 und leitet die Steuersignale über die Signalübertragungsleitungen 44 an die Steuerventile 20, 22, 34 weiter.

Falls das erste Steuerventil 20 geöffnet und das zweite Steuerventil 22 geschlossen ist und sich das weitere Steuerventil 34 in der Schaltstellung befindet, bei der ein Mediumfluss durch das weitere Steuerventil 34 unterbunden wird, strömt das von der Druckquelle 16 bereitgestellte Medium über das erste Steuerventil 20 in die Antriebseinheit 4 hinein. Dadurch wird der Antriebskolben 8 aus dem Gehäuse 6 der Antriebseinheit 4 herausgefahren.

Ist hingegen das erste Steuerventil 20 geschlossen und das zweite Steuerventil 22 geöffnet und befindet sich das weitere Steuerventil 34 in der Schaltstellung, bei der ein Mediumfluss durch das weitere Steuerventil 34 unterbunden wird, strömt das Medium über das zweite Steuerventil 22 aus der Antriebseinheit 4 in die Drucksenke 18 hinein. Dadurch wird der Antriebskolben 8 in das Gehäuse 6 der Antriebseinheit 4 eingefahren.

Die Bewegung des Antriebskolbens 8 stellt eine Antriebsbewegung der Antriebseinheit 4 dar, durch welche der beweglich gelagerte Körper 14 angetrieben wird.

An ihrer sogenannten Ringseite 9 - also an derjenigen Seite, an der sich die Kolbenstange 12 des Antriebskolbens 8 befindet - ist die Antriebseinheit 4 mit einer figürlich nicht dargestellten Druckregeleinrichtung verbunden. Die Druckregeleinrichtung sorgt dafür, dass ein Medium, welches sich innerhalb der Antriebseinheit 4 an der Ringseite 9 befindet, an der Ringseite 9 aus der Antriebseinheit 4 abfließen kann, wenn an der Kolbenseite 11 der Antriebseinheit 4 eine Druckerhöhung erfolgt. Zudem sorgt die Druckregeleinrichtung dafür, dass im Falle einer Druckabnahme an der Kolbenseite 11 das Medium an der Ringseite 9 (wieder) in die Antriebseinheit 4 hineinfließen kann. Alternativ oder zusätzlich kann die Antriebseinheit 4 eine figürlich nicht dargestellte Rückstellfeder aufweisen, um eine von der Ringseite 9 zur Kolbenseite 11 gerichtete Rückstellbewegung des Antriebskolbens 8 zu ermöglichen.

Das weitere Steuerventil 34 wird vorzugsweise dazu genutzt, einfache Bewegungen des beweglich gelagerten Körpers 14 zu realisieren, bei denen Schwingungen des beweglich gelagerten Körpers 14 unkritisch sind. In bevorzugter Weise wird das weitere Steuerventil 34 von der Steuereinheit 42 mittels einer PWM-Ansteuerung angesteuert. Weiterhin ist es möglich, dass das erste Steuerventil 20 und/oder das zweite Steuerventil 22 von der Steuereinheit 42 mittels einer PWM-Ansteuerung angesteuert werden/wird, um eine solche einfache Bewegung des beweglich gelagerten Körpers 14 zu realisieren, bei der Schwingungen des beweglich gelagerten Körpers 14 unkritisch sind.

Darüber hinaus verfügt das mechanische System 2 über einen Positionssensor 46, der über eine weitere Signalübertragungsleitung 48 mit der Steuereinheit 42 verbunden ist. Der Positionssensor 46 misst eine Position $x$ des Antriebskolbens 8 und leitet die gemessene Position $x$ an die Steuereinheit 42 weiter.

Die Ansteuerung der Steuerventile 20, 22, 34 durch die Steuereinheit 42 kann insbesondere in Abhängigkeit von der gemessenen Position $x$ des Antriebskolbens 8 erfolgen. So kann beispielsweise mithilfe des Positionssensors 46 eine Positionsregelung realisiert werden, insbesondere um Restfehler bei der mithilfe die Steuerventile 20, 22, 34 vorgenommenen Positionierung des Antriebskolbens 8 zu reduzieren.

FIG 2 zeigt ein Diagramm, in welchem eine exemplarische Übertragungsfunktion $H(f)$ des mechanischen Systems 2 aus FIG 1 als Funktion einer Frequenz $f$ dargestellt ist.

Auf der Abszisse dieses Diagramms ist die Frequenz $f$ in logarithmischer Darstellung in der Einheit Hz aufgetragen, während auf der Ordinate des Diagramms die Übertragungsfunktion $H(f)$ in willkürlichen Einheiten ("arbitrary units" = a.u.) aufgetragen ist.

Wie aus der Übertragungsfunktion $H(f)$ ersichtlich ist, weist das mechanische System 2 aus FIG 1 mehrere Eigenfrequenzen auf, welche in dem Diagramm als Peaks erkennbar sind. Im vorliegenden Ausführungsbeispiel liegt die dominante Eigenfrequenz des mechanischen Systems 2, welche zugleich die kleinste Eigenfrequenz des mechanischen Systems ist, bei circa 14,4 Hz.

Für die zugehörige Eigenperiodendauer $T_1$ also für den Kehrwert dieser Eigenfrequenz, gilt:

$$T_1 = \frac{1}{14{,}4 \text{ Hz}} \approx 69{,}4 \text{ ms}$$

Nachfolgend wird vorausgesetzt, dass die Schaltzeit $t_S$ des ersten Steuerventils 20 höchstens so groß ist wie ein Sechstel der Eigenperiodendauer $T_1$. Vorzugsweise ist die Schaltzeit $t_S$ des ersten Steuerventils 20 kleiner als ein Sechstel der Eigenperiodendauer $T_1$. Besonders bevorzugt ist es, wenn die Schaltzeit $t_S$ des ersten Steuerventils 20 weniger als 5 ms beträgt.

Um beispielsweise mithilfe des ersten Steuerventils 20 eine Antriebsbewegung des beweglichen Antriebselements der Antriebseinheit 4 zu realisieren, bei der eine Anregung unerwünschter Schwingungen des mechanisches Systems 2 weitestgehend vermieden wird, steuert die Steuereinheit 42 das erste Steuerventil 20 mit einem digitalen elektrischen Steuersignal $u(t)$ an, dessen zeitlicher Verlauf sich mathematisch durch die folgende Formel ausdrücken lässt (Steuersignal $u(t)$ in willkürlichen Einheiten):

$$u(t) = \begin{cases} 1 & \text{für } 0 \le t \le \tau_1 = \dfrac{T_1}{6} \\ 0 & \text{für } \tau_1 < t < \tau_2 = 2\,\tau_1 \\ p & \text{für } \tau_2 \le t \le \tau_3 = \tau_2 + \dfrac{\Delta x - \Delta x_{min}}{\bar{v}} \quad \forall \; \Delta x \ge \Delta x_{min} \\ 0 & \text{für } \tau_3 < t < \tau_4 = \tau_3 + \tau_1 \\ 1 & \text{für } \tau_4 \le t \le \tau_5 = \tau_4 + \tau_1 \\ 0 & \text{für } t > \tau_5 \end{cases}$$

Mit der folgenden Definition:

$$p = \begin{cases} 1 & \text{für } \Delta x > \Delta x_{min} \\ 0 & \text{für } \Delta x = \Delta x_{min} \end{cases}$$

Die Größe $t$ steht dabei für die Zeit.

Aus der Formel für $u(t)$ folgt, dass das Steuersignal $u(t)$ in der Zeit $0 \le t \le \tau_1$ einen ersten Schaltimpuls $S_1$ aufweist und in der Zeit $\tau_4 \le t \le \tau_5$ einen weiteren Schaltimpuls $S_3$ aufweist.

Aus der Definition des Parameters $p$ folgt weiterhin, dass das Steuersignal $u(t)$ zwischen dem ersten und dem weiteren Schaltimpuls $S_1$, $S_3$ in der Zeit $\tau_2 \le t \le \tau_3$ einen zusätzlichen Schaltimpuls $S_2$ aufweist, falls $\Delta x$ größer ist als $\Delta x_{min}$. Ist hingegen $\Delta x$ gleich $\Delta x_{min}$, so weist das Steuersignal $u(t)$ zwischen dem ersten und dem weiteren Schaltimpuls $S_1$, $S_3$ keinen solchen zusätzlichen Schaltimpuls $S_2$ auf. Jeder der Schaltimpulse $S_1$, $S_2$, $S_3$ bewirkt, dass das erste Steuerventil 20 geöffnet wird.

Die Größe $\Delta x$ steht für den gewünschten Verfahrweg des beweglichen Antriebselements der Antriebseinheit 4, also für den Sollwert des Verfahrwegs des Antriebskolbens 8. Ferner steht $\Delta x_{min}$ für eine vorgegebene Schrittweite, um welche sich der Antriebskolben 8 bewegt, wenn das Steuersignal $u(t)$ nur den ersten und den weiteren Schaltimpuls $S_1$, $S_3$ und nicht den zusätzlichen Schaltimpuls $S_2$ aufweist.

Weiter steht $\bar{v}$ für die mittlere Verfahrgeschwindigkeit des Antriebkolbens 8 im geöffneten Zustand des ersten Steuerventils 20. Die mittlere Verfahrgeschwindigkeit $\bar{v}$ ist gleich dem Quotienten aus dem mittleren Volumenstrom $Q$ des Mediums, das im geöffneten Zustand durch das erste Steuerventil 20 strömt, und der Kolbenfläche $A_K$ des Kolbenkopfs 10 (vgl. FIG 1). Es gilt also:

$$\bar{v} = \frac{Q}{A_K}$$

$\Delta x_{min}$ entspricht der kleinstmöglichen Schrittweite, die mit der Antriebseinheit 4 realisiert werden kann, wenn das erste Steuerventil 20 mit besagtem Steuersignal $u(t)$ angesteuert wird, wobei $\Delta x_{min}$ gegeben ist durch:

$$\Delta x_{min} = 2\,\bar{v}\,\tau_1 = \frac{2\,Q\,\tau_1}{A_K}$$

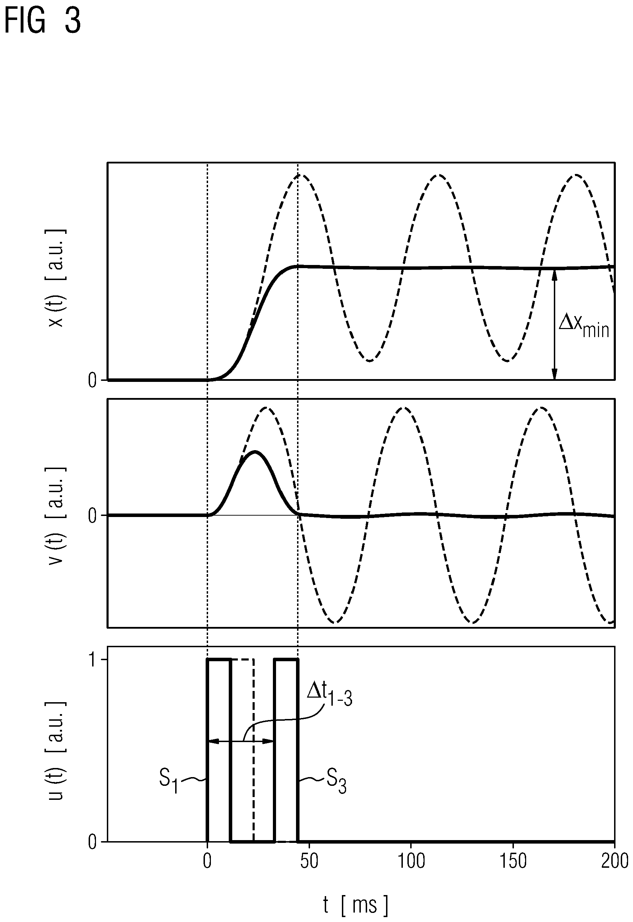

In FIG 3 sind drei Diagramme dargestellt. Die Abszissen dieser drei Diagramme repräsentieren jeweils die Zeit $t$, wobei die Abszissen aller drei Diagramme denselben Zeitraum abdecken. Die Ordinaten der Diagramme repräsentieren jeweils eine andere Größe in willkürlichen Einheiten.

Das untere der drei Diagramme aus FIG 3 zeigt das Steuersignal $u(t)$ als Funktion der Zeit $t$ in Form einer durchgezogenen Linie, wobei hier das Steuersignal $u(t)$ für den Fall dargestellt ist, dass der gewünschte Verfahrweg $\Delta x$ gleich $\Delta x_{min}$ ist.

In vorliegenden Fall weist das Steuersignal $u(t)$ den zuvor erwähnten ersten Schaltimpuls $S_1$ und den zuvor erwähnten weiteren Schaltimpuls $S_3$ auf. Jedoch weist das Steuersignal $u(t)$ in diesem Fall (also bei $\Delta x = \Delta x_{min}$) keinen zusätzlichen Schaltimpuls $S_2$ zwischen diesen beiden Schaltimpulsen $S_1$, $S_3$ auf.

Der erste Schaltimpuls $S_1$ bewirkt eine Beschleunigung des Antriebskolbens 8 (und damit auch des am Antriebskolben 8 befestigten beweglich gelagerten Körpers 14), wobei das mechanische System 2 aufgrund seiner Trägheit verzögert auf den ersten Schaltimpuls $S_1$ reagiert. Durch den weiteren Schaltimpuls $S_3$ wird verhindert, dass nach dem Ende des ersten Schaltimpulses $S_1$ der Antriebskolben 8 (nach-)schwingt.

Der erste und der weitere Schaltimpuls $S_1$, $S_3$ haben die gleiche Impulsdauer $\tau_1$, wobei die Impulsdauer $\tau_1$ dieser beiden Schaltimpulse $S_1$, $S_3$ auf besagte Eigenperiodendauer $T_1$ des mechanischen Systems 2 abgestimmt ist. Genauer gesagt entspricht die Impulsdauer $\tau_1$ der beiden Schaltimpulse $S_1$, $S_3$ einem Sechstel der Eigenperiodendauer $T_1$ - im vorliegenden Beispiel also circa 11,6 ms.

Zwischen den beiden Schaltimpulsen $S_1$, $S_3$ weist das Steuersignal $u(t)$ eine Pause mit einer vorgegebenen Pausendauer auf, wobei die Pausendauer doppelt so lang ist wie die Impulsdauer $\tau_1$ der beiden Schaltimpulse $S_1$, $S_3$. Im vorliegenden Fall entspricht der zeitliche Abstand $\Delta t_{1\text{-}3}$ zwischen dem Beginn des ersten Schaltimpulses $S_1$ und dem Beginn des weiteren Schaltimpulses $S_3$ Schaltimpuls also 3 $\tau_1 = T_1/2$.

Im oberen Diagramm von FIG 3 ist in Form einer durchgezogenen Linie die Position $x(t)$ des Antriebskolbens 8 als Funktion der Zeit $t$ dargestellt. Wie aus diesem Diagramm ersichtlich ist, bewegt sich der Antriebskolben 8 bei einer Ansteuerung des ersten Steuerventils 20 mit dem in FIG 3 dargestellten Steuersignal $u(t)$ (siehe durchgezogene Linie im unteren Diagramm von FIG 3) um die Strecke $\Delta x_{min}$, ohne dabei nennenswert zu schwingen. Entsprechend bewegt sich auch der am Antriebskolben 8 befestigte beweglich gelagerte Körper 14 um die Strecke $\Delta x_{min}$, ohne nennenswert zu schwingen.

Die Geschwindigkeit $v(t)$ des Antriebskolbens 8, welche im mittleren Diagramm in Form einer durchgezogenen Linie dargestellt ist, hat einen impulsartigen Verlauf.

Wird das erste Steuerventil 20 wiederholt mit dem Steuersignal $u(t)$ angesteuert, welches im unteren Diagramm von FIG 3 dargestellt ist (vgl. durchgezogene Linie im unteren Diagramm von FIG 3), so bewegt sich der Antriebskolben 8 dabei jedes Mal um die Strecke $\Delta x_{min}$. Auf diese Weise lässt sich ein Schrittantrieb (mit der Schrittweite $\Delta x_{min}$) realisieren.

Aus den drei Diagrammen von FIG 3 ist ersichtlich, dass der Antriebskolben 8 aufgrund der Trägheit des mechanischen Systems 2 verzögert auf eine Beschleunigung durch den ersten Schaltimpuls $S_1$ reagiert. Ferner ist aus den drei Diagrammen ersichtlich, dass die Bewegung des Antriebskolbens 8 zeitgleich mit dem Ende des weiteren Schaltimpulses $S_3$ endet.

Weiterhin ist zum Vergleich im unteren Diagramm von FIG 3 ein anderes (nicht erfindungsgemäßes) Steuersignal für das erste Steuerventil 20 in Form einer gestrichelten Linie dargestellt, welches Steuersignal nur einen einzigen Schaltimpuls aufweist, der bei $t = 0$ beginnt und dessen Impulsdauer doppelt so lang ist wie die Impulsdauer $\tau_1$ des ersten Schaltimpulses $S_1$. Wird das erste Steuerventil 20 mit diesem anderen Steuersignal angesteuert, so bewegt sich der Antriebskolben 8 ebenfalls um die Strecke $\Delta x_{min}$. Jedoch oszilliert der Antriebskolben 8 in diesem Fall um die Position $x = \Delta x_{min}$ (siehe gestrichelten Linien im oberen sowie im mittleren Diagramm von FIG 3). Entsprechend oszilliert bei einer solchen Ansteuerung auch der am Antriebskolben 8 befestigte beweglich gelagerte Körper 14 des mechanischen Systems 2.

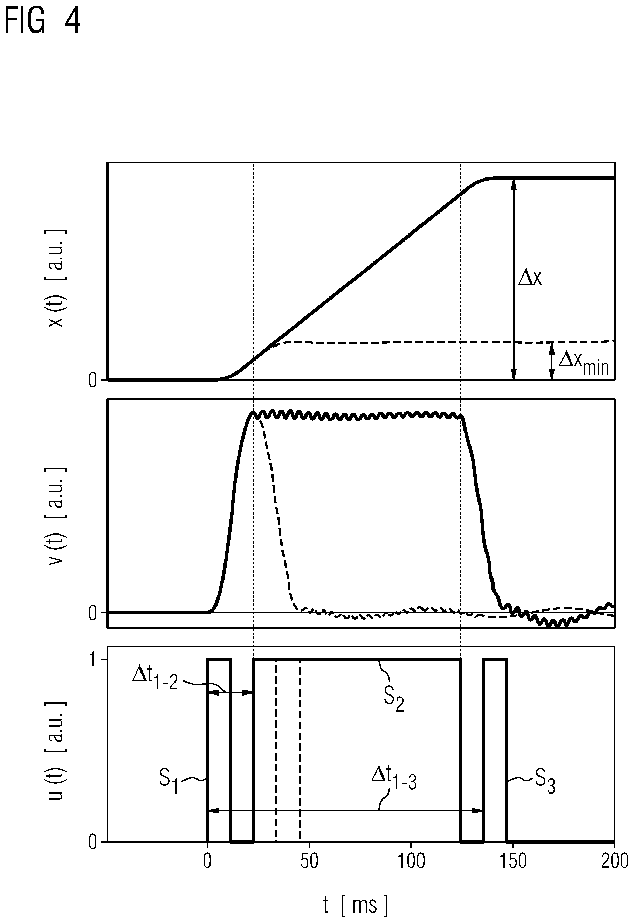

In FIG 4 sind ebenfalls drei Diagramme dargestellt. Diese drei Diagramme zeigen dieselben drei Größen als Funktion der Zeit $t$, die auch in FIG 3 als Funktion der Zeit $t$ dargestellt sind, nämlich das Steuersignal $u(t)$, die Position $x(t)$ des Antriebskolbens und die Geschwindigkeit $v(t)$ des Antriebskolbens 8.

Das untere der drei Diagramme aus FIG 4 zeigt in Form einer durchgezogenen Linie das Steuersignal $u(t)$ für das erste Steuerventil 20 als Funktion der Zeit $t$, wobei hier das Steuersignal $u(t)$ für den Fall dargestellt ist, dass der gewünschte Verfahrweg $\Delta x$ größer ist als $\Delta x_{min}$.

Im vorliegenden Fall (also bei $\Delta x > \Delta x_{min}$) weist das Steuersignal $u(t)$ den besagten ersten Schaltimpuls $S_1$ und den besagten weiteren Schaltimpuls $S_3$ auf, deren beider Impulsdauer $\tau_1$ jeweils gleich einem Sechstel der Eigenperiodendauer $T_1$ ist.

Zudem weist das Steuersignal $u(t)$ zwischen dem ersten und dem weiteren Schaltimpuls $S_1$, $S_3$ den zuvor erwähnten zusätzlichen Schaltimpuls $S_2$ auf. Die Impulsdauer des zusätzlichen Schaltimpulses $S_2$ (also des mittleren Schaltimpulses) ist gleich dem Quotienten $(\Delta x - \Delta x_{min})/\overline{v}$.

Zwischen dem ersten und dem zusätzlichen Schaltimpuls $S_1$, $S_2$ weist das Steuersignal $u(t)$ eine erste Pause auf und zwischen dem zusätzlichen und dem weiteren Schaltimpuls $S_2$, $S_3$ weist das Steuersignal $u(t)$ eine zweite Pause auf, wobei die jeweilige Pausendauer gleich der Impulsdauer $\tau_1$ des ersten und des weiteren Schaltimpulses $S_1$, $S_3$ ist. Im vorliegenden Fall entspricht der zeitliche Abstand $\Delta t_{1\text{-}3}$ zwischen dem Beginn des ersten Schaltimpulses $S_1$ und dem Beginn des weiteren Schaltimpulses $S_3$ folglich 3 $\tau_1 + (\Delta x - \Delta x_{min})/\overline{v}$. Der zeitliche Abstand $\Delta t_{1\text{-}2}$ zwischen dem Beginn des ersten Schaltimpulses $S_1$ und dem Beginn des zusätzlichen Schaltimpulses $S_2$ beträgt 2 $\tau_1$.

Im oberen Diagramm von FIG 4 ist in Form einer durchgezogenen Linie die Position $x(t)$ des Antriebskolbens 8 als Funktion der Zeit $t$ dargestellt. Wie aus diesem Diagramm ersichtlich ist, bewegt sich der Antriebskolben 8 bei einer Ansteuerung des ersten Steuerventils 20 mit dem in FIG 4 dargestellten Steuersignal $u(t)$ (siehe durchgezogene Linie im unteren Diagramm von FIG 4) um die Strecke $\Delta x$, ohne dabei nennenswert zu schwingen. Entsprechend bewegt sich auch der am Antriebskolben 8 befestigte beweglich gelagerte Körper 14 um die Strecke $\Delta x$, ohne nennenswert zu schwingen.

Der erste und der weitere Schaltimpuls $S_1$, $S_3$ bewirken gemeinsam, dass sich der Antriebskolben 8 - und damit auch der am Antriebskolben 8 befestigte beweglich gelagerte Körper 14 des mechanischen Systems 2 - um die Strecke $\Delta x_{min}$ bewegt. Der zusätzliche Schaltimpuls $S_2$ bewirkt, dass sich der Antriebskolben 8 - und damit auch der am Antriebskolben 8 befestigte beweglich gelagerte Körper 14 - (zusätzlich) um die Strecke $\Delta x - \Delta x_{min}$ bewegt. Zusammen bewirken die drei Schaltimpulse $S_1$, $S_2$, $S_3$ somit, dass sich der Antriebskolben 8 - und damit auch der am Antriebskolben 8 befestigte beweglich gelagerte Körper 14 - um die Strecke $\Delta x$ bewegt.

Aus dem mittleren Diagramm von FIG 4, in welchem die Geschwindigkeit $v(t)$ des Antriebskolbens 8 in Form einer durchgezogenen Linie dargestellt ist, ist ersichtlich, dass sich der Antriebskolben 8 während des zusätzlichen Schaltimpulses $S_2$ mit einer annähernd stationären Geschwindigkeit bewegt. (Kleine hochfrequente Schwingungen der Geschwindigkeit $v(t)$ lassen sich auf hochfrequente Eigenfrequenzen des mechanischen Systems 2 zurückführen.) Die Geschwindigkeit des Antriebskolbens 8 entspricht zugleich des am Antriebskolben 8 befestigten beweglich gelagerten Körpers 14 des mechanischen Systems 2.

In den Diagrammen von FIG 4 sind zum Vergleich außerdem das Steuersignal $u(t)$ aus FIG 3 sowie die zugehörige Position $x(t)$ des Antriebskolbens 8 und die zugehörige Geschwindigkeit $v(t)$ des Antriebskolbens 8 als Funktion der Zeit $t$ jeweils in Form einer gestrichelten Linie dargestellt.

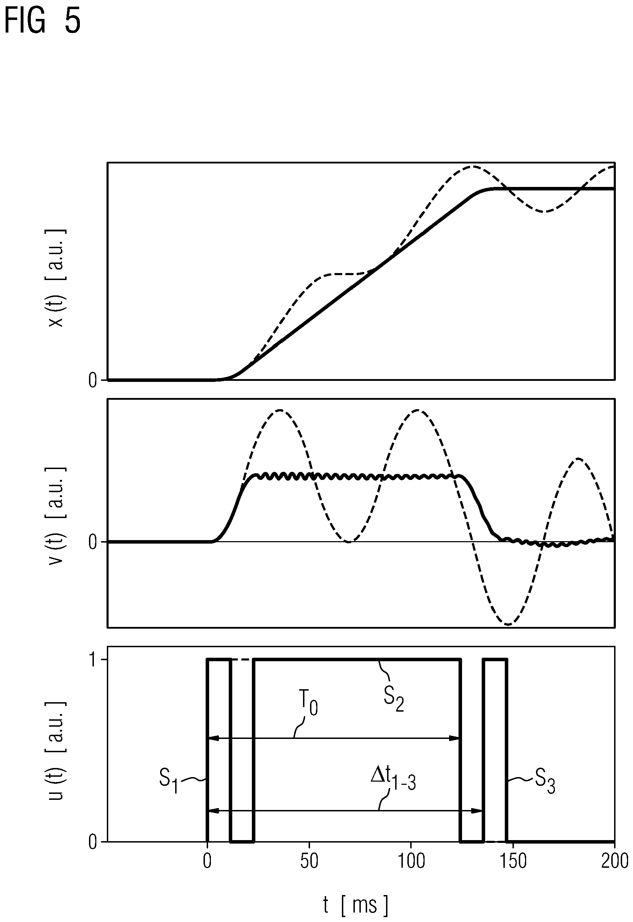

Auch in FIG 5 sind drei Diagramme dargestellt. Diese drei Diagramme zeigen dieselben drei Größen als Funktion der Zeit $t$, die auch in FIG 3 und FIG 4 als Funktion der Zeit $t$ dargestellt sind, nämlich das Steuersignal $u(t)$, die Position $x(t)$ des Antriebskolbens und die Geschwindigkeit $v(t)$ des Antriebskolbens 8.

Die in FIG 5 jeweils in Form einer durchgezogenen Linie dargestellten zeitlichen Verläufe des Steuersignal $u(t)$, der Position $x(t)$ des Antriebskolbens 8 und der Geschwindigkeit $v(t)$ des Antriebskolbens 8 sind mit den in FIG 4 jeweils in Form einer durchgezogenen Linie dargestellten zeitlichen Verläufen dieser Größen identisch.

Im unteren Diagramm von FIG 5 ist zum Vergleich ein anderes (nicht erfindungsgemäßes) Steuersignal für das erste Steuerventil 20 in Form einer gestrichelten Linie dargestellt, welches Steuersignal nur einen einzigen Schaltimpuls aufweist, der bei $t = 0$ beginnt und dessen Impulsdauer $T_0$ der Summe der drei zuvor genannten Schaltimpulse $S_1$, $S_2$, $S_3$ entspricht. Wird das erste Steuerventil 20 mit diesem anderen Steuersignal angesteuert, so bewegt sich der Antriebskolben 8 ebenfalls um die Strecke $\Delta x$, jedoch oszilliert der Antriebskolben 8 in diesem Fall um die Position $x = \Delta x$ bzw. auf seinem Weg dorthin (siehe gestrichelte Linien im oberen sowie im mittleren Diagramm von FIG 5). Entsprechend oszilliert bei einer solchen Ansteuerung auch der am Antriebskolben 8 befestigte beweglich gelagerte Körper 14 des mechanischen Systems 2.

Bei den in FIG 3 bis FIG 5 dargestellten zeitlichen Verläufen wurde vorausgesetzt, dass die Schaltzeit $t_S$ des ersten Steuerventils 20 kleiner ist als ein Sechstel der Eigenperiodendauer $T_1$.

Falls diese Voraussetzung nicht erfüllt ist, also falls die Schaltzeit $t_S$ größer ist als ein Sechstel der Eigenperiodendauer $T_1$, wird das erste Steuerventil 20 ballistisch angesteuert, wobei andere Impulsdauern für die Schaltimpulse eingestellt werden.

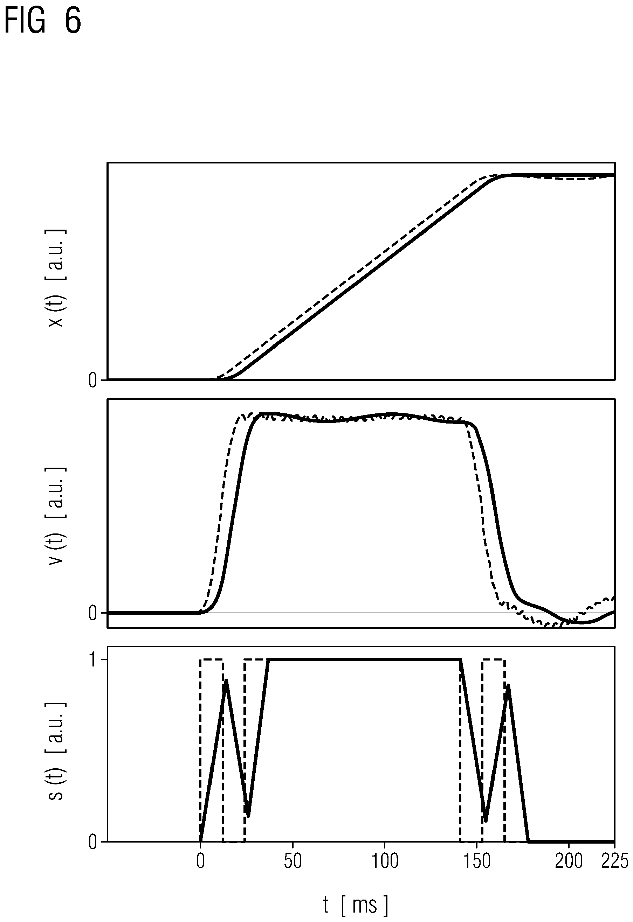

In FIG 6 sind erneut drei Diagramme dargestellt. Das obere und das mittlere Diagramme von FIG 6 zeigen - wie bereits in FIG 3 bis FIG 5 - die Position $x(t)$ des Antriebskolbens 8 bzw. die Geschwindigkeit $v(t)$ des Antriebskolbens 8 als Funktion der Zeit $t$.

Im Zusammenhang mit FIG 6 wird angenommen, dass die Schaltzeit $t_S$ des ersten Steuerventils 20 beispielsweise 15 ms beträgt, also größer ist als ein Sechstel der Eigenperiodendauer $T_1$. In diesem Fall wird das erste Steuerventil 20 ballistisch angesteuert.

Das untere Diagramm von FIG 6 zeigt - anders als in FIG 3 bis FIG 5 - eine Position $s(t)$ des Ventilkolbens des ersten Steuerventils 20 als Funktion der Zeit $t$. Dabei steht der Wert "1" in diesem Diagramm für eine Position des Ventilkolbens, bei der das erste Steuerventil 20 vollständig geöffnet ist, während der Wert "0" für eine Position des Ventilkolbens steht, bei der das erste Steuerventil 20 vollständig geschlossen ist. Entsprechend beziehen sich Werte zwischen 0 und 1 auf Zwischenpositionen des Ventilkolbens zwischen diesen beiden Positionen.

Der zeitliche Verlauf der Position $s(t)$ des Ventilkolbens bei der ballistischen Ansteuerung des ersten Steuerventils 20 ist im unteren Diagramm von FIG 6 in Form einer durchgezogenen Linie dargestellt.

Das Steuersignal $\tilde{u}(t)$, mit dem das erste Steuerventil 20 bei der ballistischen Ansteuerung angesteuert wird, lässt sich mathematisch durch die folgende Formel ausdrücken (Steuersignal $\tilde{u}(t)$ in willkürlichen Einheiten):

$$\tilde{u}(t) = \begin{cases} 1 & \text{für } 0 \leq t \leq \widetilde{\tau}_1 = \dfrac{1}{2}\left(\dfrac{T_1}{6} + t_S\right) \\ 0 & \text{für } \widetilde{\tau}_1 < t < \widetilde{\tau}_2 = 2\,\widetilde{\tau}_1 \\ p' & \text{für } \widetilde{\tau}_2 \leq t \leq \widetilde{\tau}_3 = \widetilde{\tau}_2 + \dfrac{\Delta x - \Delta x_{min}'}{\bar{v}} \quad \forall \; \Delta x \geq \Delta x_{min}' \\ 0 & \text{für } \widetilde{\tau}_3 < t < \widetilde{\tau}_4 = \widetilde{\tau}_3 + \widetilde{\tau}_1 \\ 1 & \text{für } \widetilde{\tau}_4 \leq t \leq \widetilde{\tau}_5 = \widetilde{\tau}_4 + \widetilde{\tau}_1 \\ 0 & \text{für } t > \widetilde{\tau}_5 \end{cases}$$

Mit der folgenden Definition:

$$p' = \begin{cases} 1 & \text{für } \Delta x > \Delta x_{min}' \\ 0 & \text{für } \Delta x = \Delta x_{min}' \end{cases}$$

Aus der Formel für $\tilde{u}(t)$ folgt, dass das Steuersignal $\tilde{u}(t)$ in der Zeit $0 \leq t \leq \widetilde{\tau}_1$ einen ersten Schaltimpuls aufweist und in der Zeit $\widetilde{\tau}_4 \leq t \leq \widetilde{\tau}_5$ einen weiteren Schaltimpuls aufweist.

Aus der Definition des Parameters $p'$ folgt weiterhin, dass das Steuersignal $\tilde{u}(t)$ zwischen dem ersten und dem weiteren Schaltimpuls in der Zeit $\widetilde{\tau}_2 \leq t \leq \widetilde{\tau}_3$ einen zusätzlichen Schaltimpuls aufweist, falls $\Delta x$ größer ist als $\Delta x_{min}'$. Ist hingegen $\Delta x$ gleich $\Delta x_{min}'$, so weist das Steuersignal $\tilde{u}(t)$ zwischen dem ersten und dem weiteren Schaltimpuls keinen solchen zusätzlichen Schaltimpuls auf.

Der erste und der weitere Schaltimpuls haben im vorliegenden Fall eine andere Impulsdauer $\widetilde{\tau}_1$ als bei einer Ansteuerung gemäß FIG 3 oder FIG 4. Für die Impulsdauer $\widetilde{\tau}_1$ des ersten und weiteren Schaltimpulses gilt im vorliegenden Fall:

$$\widetilde{\tau}_1 = \frac{1}{2}(\tau_1 + t_S) = \frac{1}{2}\left(\frac{T_1}{6} + t_S\right)$$

Die Impulsdauer $\widetilde{\tau}_1$ des ersten und weiteren Schaltimpulses entspricht also dem arithmetischen Mittelwert aus der Schaltzeit $t_S$ des ersten Steuerventils 20 und einem Sechstel der Eigenperiodendauer $T_1$.

Entsprechend gilt für die kleinstmögliche Schrittweite $\Delta x_{min}'$ der Antriebseinheit 4, um welche sich das bewegliche Antriebselement der Antriebseinheit 4 bewegt, wenn das Steuersignal $\tilde{u}(t)$ nur den ersten und den weiteren Schaltimpuls und nicht den zusätzlichen Schaltimpuls aufweist:

$$\Delta x_{min}' = 2\,\bar{v}\,\widetilde{\tau}_1 = \frac{2\,Q\,\widetilde{\tau}_1}{A_K}$$

Bei dem in FIG 6 dargestellten Fall wird vorausgesetzt, dass der Sollwert des Verfahrwegs des Antriebskolbens 8 den gleichen Betrag $\Delta x$ haben soll wie bei der Ventilansteuerung gemäß FIG 4 und FIG 5. Im vorliegenden Fall weist das Steuersignal $\tilde{u}(t)$ zwischen seinem ersten und seinem weiteren Schaltimpuls auch noch den zusätzlichen Schaltimpuls auf.

Aus dem unteren Diagramm von FIG 6 ist ersichtlich, dass der erste und der weitere Schaltimpuls des Steuersignals $\tilde{u}(t)$ eine so kurze Impulsdauer $\widetilde{\tau}_1$ aufweisen, dass durch die impulsartige Betätigung des ersten Steuerventils 20 durch den ersten bzw. weiteren Schaltimpuls der Ventilkolben in Öffnungsrichtung gestoßen wird, ohne dass der Ventilkolben seine Endlage bei voller Öffnung des Steuerventils 20 erreicht, und der Ventilkolben anschließend unter Einwirkung der Ventilfeder des ersten Steuerventils 20 und/oder unter Einwirkung von Strömungskräften wieder in Richtung seiner geschlossenen Endlage zurück fällt. Die Impulsdauer des zusätzlichen Schaltimpulses des Steuersignals

$\tilde{u}(t)$ ist hingegen lang genug, dass der Ventilkolben seine Endlage bei voller Öffnung des Steuerventils 20 erreicht.

Zum Vergleich ist im unteren Diagramm von FIG 6 die Position des Ventilkolbens als Funktion der Zeit $t$ bei der Ansteuerung gemäß FIG 4 und FIG 5 - bei welcher vorausgesetzt wird, dass $t_S \leq T_1/6$ gilt - in Form einer gestrichelten Linie dargestellt. Zudem sind im oberen und mittleren Diagramm von FIG 6 der zeitliche Verlauf der Position $x(t)$ des Antriebskolbens 8 bzw. der zeitliche Verlauf der Geschwindigkeit $v(t)$ des Antriebskolbens 8 aus FIG 4 und FIG 5 in Form einer gestrichelten Linie dargestellt.

Aus den Diagrammen von FIG 6 ist ersichtlich, dass im Falle der ballistischen Ansteuerung des ersten Steuerventils 20 mit der angepassten Impulsdauer $\tilde{\tau}_1$ der Antriebskolben 8 dieselbe Strecke $\Delta x$ zurücklegt wie im Falle der im Zusammenhang mit FIG 4 und FIG 5 beschriebenen Ansteuerung (bei der jedoch $t_S \leq T_1/6$ vorausgesetzt wurde).

Auch bei der ballistischen Ansteuerung des ersten Steuerventils 20 bewegt sich der Antriebskolben 8 - und damit auch der am Antriebskolben 8 befestigte beweglich gelagerte Körper 14 - ohne nennenswert zu schwingen. Allerdings erfolgt im Falle der ballistischen Ansteuerung mit der angepassten Impulsdauer $\tilde{\tau}_1$ die Bewegung des Antriebkolbens 8 (aufgrund der größeren Schaltzeit $t_S$) mit einer kleinen Zeitverzögerung gegenüber der in FIG 4 und FIG 5 dargestellten Bewegung des Antriebkolbens 8.

Für den Fall, dass der Sollwert des Verfahrwegs $\Delta x$ des Antriebskolbens 8 gleich $\Delta x_{min}'$ sein soll, fehlt der zusätzliche Schaltimpuls im Steuersignal $\tilde{u}(t)$.

Um mithilfe des zweiten Steuerventils 22 eine Antriebsbewegung der Antriebseinheit 4 zu realisieren, bei der eine Anregung unerwünschter Schwingungen des mechanisches Systems 2 weitestgehend vermieden wird, kann das zweite Steuerventil 22 von der Steuereinheit 42 analog zu der im Zusammenhang mit FIG 3 bis FIG 6 beschrieben Art und Weise angesteuert werden. Anders ausgedrückt, die obigen Ausführungen betreffend die Ansteuerung des ersten Steuerventils 20 gelten in analoger Weise für das zweite Steuerventil 22.

Die Beschreibungen der nachfolgenden Ausführungsbeispiele beschränken sich jeweils primär auf die Unterschiede zu dem vorangegangenen Ausführungsbeispiel, auf das bezüglich gleichbleibender Merkmale und Funktionen verwiesen wird. Im Wesentlichen gleiche bzw. einander entsprechende Elemente sind, soweit zweckdienlich, mit den gleichen Bezugszeichen bezeichnet und nicht erwähnte Merkmale sind in den nachfolgenden Ausführungsbeispielen übernommen, ohne dass sie erneut beschrieben werden.

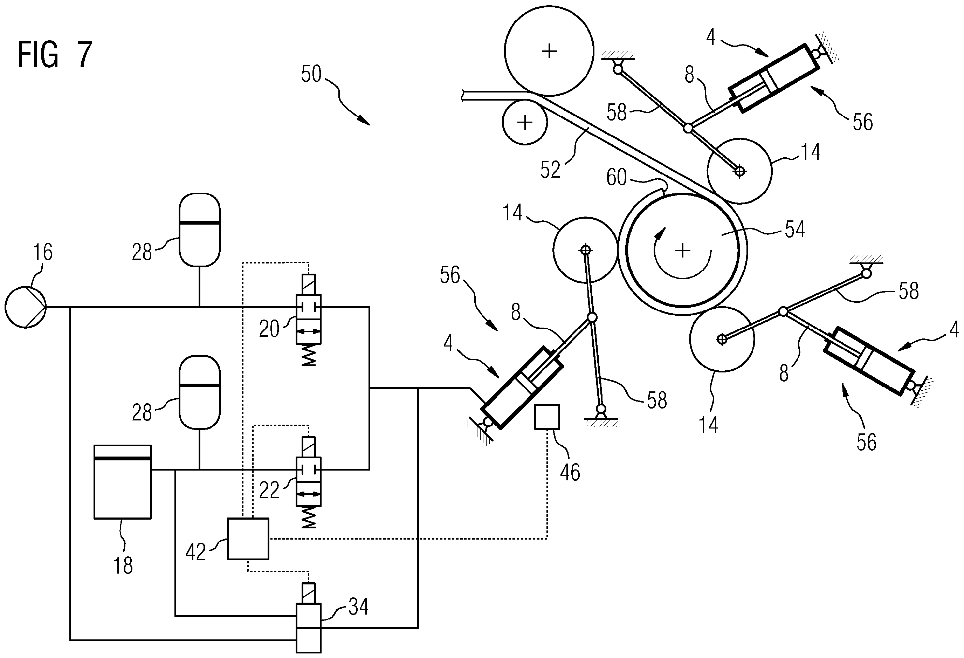

FIG 7 zeigt eine schematische Darstellung einer Haspelanlage 50 zum Aufwickeln eines Metallbands 52 zu einem Bund (Coil).

Die Haspelanlage 50 umfasst unter anderem einen rotierbar gelagerten Haspeldorn 54. Ferner umfasst die Haspelanlage 50 im vorliegenden Ausführungsbeispiel drei baugleich ausgebildete mechanische Systeme 56.

Jedes dieser drei mechanischen Systeme 56 umfasst eine mit einem Medium betreibbare Antriebseinheit 4, welche als Hydraulikzylinder ausgebildet ist und einen verschiebbaren Antriebskolben 8 als Antriebselement aufweist. Zudem umfasst jedes der drei mechanischen Systeme 56 einen beweglich gelagerten Körper 14, der mithilfe der Antriebseinheit 4 angetrieben wird, sowie eine an einem Fundament befestige schwenkbare Schwenkarmeinheit 58, die mit dem Antriebskolben 8 der Antriebseinheit 4 verbunden ist und einen schwingungsfähigen Teil des mechanischen Systems 56 ausbildet.

Im vorliegenden Ausführungsbeispiel ist der beweglich gelagerte Körper 14 des jeweiligen mechanischen Systems eine Andrückrolle zum Anpressen des Metallbands 52 gegen den Haspeldorn 54 bzw. gegen den bereits aufgewickelten Teil des Metallbands 52, wobei die Andrückrolle an der Schwenkarmeinheit 58 des jeweiligen mechanischen Systems 56 rotierbar gelagert ist. Ansonsten ist das jeweilige mechanische System 56 der Haspelanlage 50 wie das mechanische System 2 aus FIG 1 ausgestaltet. Das heißt insbesondere, dass jedes der drei mechanischen Systeme 56 unter anderem ein erstes Steuerventil 20, ein zweites Steuerventil 22 und ein weiteres Steuerventil 34 zum Steuern einer Antriebsbewegung der Antriebseinheit 4 umfasst, wobei das erste und zweite Steuerventil 20, 22 jeweils als Digitalventil und das weitere Steuerventil 34 als Stetigventil ausgebildet sind.

In FIG 7 sind exemplarisch nur bei einem der drei mechanischen Systeme 56 dessen Komponenten zur Steuerung der Antriebsbewegung der Antriebseinheit 4 dargestellt. Bei den anderen beiden mechanischen Systemen 56 der Haspelanlage 50 sind solche Komponenten einer besseren Übersichtlichkeit halber figürlich nicht dargestellt.

Bei jedem der drei mechanischen Systeme 56 der Haspelanlage 50 wird die Andrückrolle während eines Aufwickelvorgangs des Metallbands 52, bei dem das Metallband 52 auf den rotierenden Haspeldorn 54 aufgewickelt wird, mithilfe der Antriebseinheit 4 des jeweiligen mechanischen Systems 56 gegen das Metallband 52 gedrückt.

Solange weniger als $n$ Wicklungen des Metallbands 52 auf den Haspeldorn 54 aufgewickelt worden sind, wird während des Aufwickelvorgangs des Metallbands 52 bei dem jeweiligen mechanischen System 56 eine vorgegebene Zeitdauer vor einem Zeitpunkt, bei dem sich der auf dem Haspeldorn 54 aufliegende Bandanfang 60 des Metallbands 52 zwischen der Drehachse des Haspeldorns 54 und der Drehachse der Andrückrolle befindet, die Andrückrolle vom Metallband 52 abgehoben und eine vorgegebene Zeitdauer nach diesem Zeitpunkt die Andrückrolle wieder auf das Metallband 52 aufgesetzt. Auf diese Weise wird vermieden, dass die inneren $n$ Wicklungen des Metallbands 52 gegen den Bandanfang 60 eingedrückt werden, wobei *n* eine natürliche Zahl ist. Typischerweise ist *n* gleich drei, vier oder fünf.

Das Abheben und Aufsetzen der jeweiligen Andrückrolle wird mithilfe des ersten und zweiten Steuerventils 20, 22 des jeweiligen mechanischen Systems 56 gesteuert. Um zu vermeiden, dass die jeweilige Andrückrolle beim Abheben und/oder Aufsetzen zu Schwingungen angeregt wird, werden das erste und zweite Steuerventil 20, 22 des jeweiligen mechanischen Systems 56 mit einem der zuvor beschriebenen Steuersignale *u(t)*, *ũ(t)* angesteuert, wobei die Impulsdauer des ersten und weiteren Schaltimpulses auf eine Eigenfrequenz bzw. Eigenperiodendauer des jeweiligen mechanischen Systems 56 abgestimmt werden.

Einfache Bewegungen der jeweiligen Andrückrolle, wie zum Beispiel deren Ein- und Ausschwenken, können beispielsweise mithilfe des weiteren Steuerventils 34 des jeweiligen mechanischen Systems 56 gesteuert werden, insbesondere mittels einer PWM-Ansteuerung des weiteren Steuerventils 56.

Die Haspelanlage 50 muss nicht notwendigerweise genau drei solche mechanischen Systeme 56 aufweisen. Prinzipiell ist es möglich, dass die Haspelanlage 50 eine andere Anzahl, beispielsweise vier, solcher mechanischen Systeme 56 aufweist, die in der oben beschriebenen Art und Weise gesteuert werden.

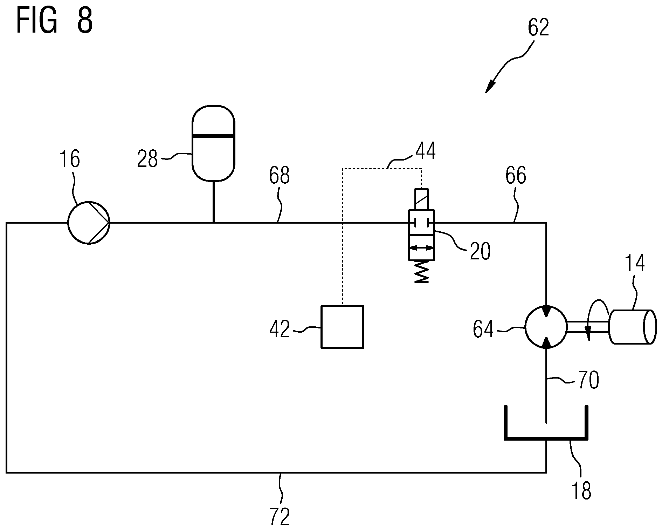

FIG 8 zeigt eine schematische Darstellung eines weiteren mechanischen Systems 62.

Dieses mechanische System 62 umfasst ebenfalls eine mit einem Medium betreibbare rotatorische Antriebseinheit 64 sowie einen beweglich gelagerten Körper 14, der durch die Antriebseinheit 64 angetrieben wird. Im vorliegenden Ausführungsbeispiel ist die Antriebseinheit 64 als Hydraulikmotor ausgebildet, welcher einen figürlich nicht dargestellten Rotor als bewegliches Antriebselement aufweist. Weiterhin ist der beweglich gelagerten Körper 14 im vorliegenden Ausführungsbeispiel rotierbar gelagert.

Darüber hinaus verfügt das mechanische System 62 über eine Druckquelle 16, die als Pumpe ausgebildet ist, und eine Drucksenke 18, die als Tank ausgebildet ist.

Ferner weist das mechanische System 62 aus FIG 8 ein Steuerventil 20 auf, welches als Digitalventil ausgebildet ist und das von einer Steuereinheit 42 des mechanischen Systems 62 gesteuert wird, wobei das Steuerventil 20 über eine Signalübertragungsleitung 44 mit der Steuereinheit 42 verbunden ist.

Das Steuerventil 20 ist über eine erste Fluidleitung 66 des mechanischen Systems 62 mit der Antriebseinheit 64 verbunden. Über eine zweite Fluidleitung 68 des mechanischen Systems 62 ist das Steuerventil 20 mit der Druckquelle 16 verbunden, wobei an die zweite Fluidleitung 68 ein teilweise mit einem Gas gefüllter Druckspeicher 28 angeschlossen ist.

Weiterhin ist die Drucksenke 18 über eine dritte Fluidleitung 70 des mechanischen Systems 62 mit der Antriebseinheit 64 verbunden. Über eine vierte Fluidleitung 72 des mechanischen Systems 62 ist die Drucksenke 18 an die Druckquelle 16 angeschlossen.

Ist das Steuerventil 20 geöffnet, so strömt das von der Druckquelle 16 bereitgestellte Medium über das Steuerventil 20 zur Antriebseinheit 64 und treibt deren Rotor an, wodurch wiederum der beweglich gelagerte Körper 14 angetrieben wird. Das aus der Antriebseinheit 64 austretende Medium strömt zur Drucksenke 18, von wo aus das Medium von der als Pumpe ausgebildeten Druckquelle 16 zum Steuerventil 20 gefördert wird.

Um mithilfe des Steuerventils 20 eine Antriebsbewegung der Antriebseinheit 64 zu realisieren, bei der eine Anregung unerwünschter Schwingungen des mechanisches Systems 62 weitestgehend vermieden wird, steuert die Steuereinheit 42 das Steuerventil 20 mit einem digitalen elektrischen Steuersignal *w(t)* an, dessen zeitlicher Verlauf sich mathematisch durch die folgende Formel ausdrücken lässt (Steuersignal *w(t)* in willkürlichen Einheiten):

$$w(t) = \begin{cases} 1 & \text{für } 0 \leq t \leq \kappa_1 \\ 0 & \text{für } \kappa_1 < t < \kappa_2 = 2\,\kappa_1 \\ P & \text{für } \kappa_2 \leq t \leq \kappa_3 = \kappa_2 + \dfrac{\Delta\varphi - \Delta\varphi_{min}}{\overline{\omega}} \;\; \forall \; \Delta\varphi \geq \Delta\varphi_{min} \\ 0 & \text{für } \kappa_3 < t < \kappa_4 = \kappa_3 + \kappa_1 \\ 1 & \text{für } \kappa_4 \leq t \leq \kappa_5 = \kappa_4 + \kappa_1 \\ 0 & \text{für } t > \kappa_5 \end{cases}$$

Mit der folgenden Definition:

$$P = \begin{cases} 1 & \text{für } \Delta\varphi > \Delta\varphi_{min} \\ 0 & \text{für } \Delta\varphi = \Delta\varphi_{min} \end{cases}$$

Aus der Formel für *w(t)* folgt, dass das Steuersignal *w(t)* in der Zeit $0 \leq t \leq \kappa_1$ einen ersten Schaltimpuls mit der Impulsdauer $\kappa_1$ aufweist und in der Zeit $\kappa_4 \leq t \leq \kappa_5$ einen weiteren Schaltimpuls mit der gleichen Impulsdauer $\kappa_1$ aufweist.

Die Impulsdauer $\kappa_1$ des ersten und zweiten Schaltimpulses ist gleich einem Sechstel der dominanten Eigenperiodendauer des mechanischen Systems 62, falls die Schaltzeit $t_S$ des Steuerventils 20 höchstens so groß ist wie ein Sechstel der dominanten Eigenperiodendauer. Ist hingegen die Schaltzeit $t_S$ des Steuerventils 20 größer als ein Sechstel der dominanten Eigenperiodendauer des mechanischen Systems 62, ist die Impulsdauer $\kappa_1$ des ersten und zweiten Schaltimpulses gleich dem arithmetischen Mittel aus einem Sechstel der dominanten Eigenperiodendauer des mechanischen Systems 62 und der Schaltzeit $t_S$ des Steuerventils 20.

Aus der Definition des Parameters $P$ folgt weiterhin, dass das Steuersignal $w(t)$ zwischen dem ersten und dem weiteren Schaltimpuls in der Zeit $\kappa_2 \leq t \leq \kappa_3$ einen zusätzlichen Schaltimpuls aufweist, falls $\Delta\varphi$ größer ist als $\Delta\varphi_{min}$. Ist hingegen $\Delta\varphi$ gleich $\Delta\varphi_{min}$, so weist das Steuersignal $w(t)$ zwischen dem ersten und dem weiteren Schaltimpuls keinen solchen zusätzlichen Schaltimpuls auf.

Die Größe $\Delta\varphi$ steht für den vom beweglichen Antriebselement der Antriebseinheit 64 bei seiner Antriebsbewegung zurückzulegenden Drehwinkel, also für den Sollwert des Drehwinkels des Rotors. Ferner steht die Größe $\Delta\varphi_{min}$ für eine vorgegebene (Winkel-)Schrittweite, um welche sich der Rotor dreht, wenn das Steuersignal $w(t)$ nur den ersten und den weiteren Schaltimpuls und nicht den zusätzlichen Schaltimpuls aufweist. $\Delta\varphi_{min}$ entspricht der kleinstmöglichen (Winkel-)Schrittweite, die mit der Antriebseinheit 64 realisiert werden kann, wenn das Steuerventil 20 mit besagtem Steuersignal $w(t)$ angesteuert wird.

Weiter steht $\overline{\omega}$ für die mittlere Winkelgeschwindigkeit des Rotors der Antriebseinheit 64 im geöffneten Zustand des Steuerventils 20.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

Bezugszeichenliste

| | |
|---|---|
| 2 | System |
| 4 | Antriebseinheit |
| 6 | Gehäuse |
| 8 | Antriebskolben |
| 9 | Ringseite |
| 10 | Kolbenkopf |
| 11 | Kolbenseite |
| 12 | Kolbenstange |
| 14 | Körper |
| 16 | Druckquelle |
| 18 | Drucksenke |
| 20 | Steuerventil |
| 22 | Steuerventil |
| 24 | Fluidleitung |
| 26 | Fluidleitung |
| 28 | Druckspeicher |
| 30 | Fluidleitung |
| 32 | Fluidleitung |
| 34 | Steuerventil |
| 36 | Fluidleitung |
| 38 | Fluidleitung |
| 40 | Fluidleitung |
| 42 | Steuereinheit |
| 44 | Signalübertragungsleitung |
| 46 | Positionssensor |
| 48 | Signalübertragungsleitung |
| 50 | Haspelanlage |
| 52 | Metallband |
| 54 | Haspeldorn |
| 56 | System |
| 58 | Schwenkarmeinheit |
| 60 | Bandanfang |

| 62 | System |
|----|--------|
| 64 | Antriebseinheit |
| 66 | Fluidleitung |
| 68 | Fluidleitung |
| 70 | Fluidleitung |
| 72 | Fluidleitung |
| $S_1$ | Schaltimpuls |
| $S_2$ | Schaltimpuls |
| $S_3$ | Schaltimpuls |

**Patentansprüche**

1. Verfahren zum Steuern einer Bewegung eines beweglich gelagerten Körpers (14) eines mechanischen Systems (2, 56, 62), bei dem das mechanische System (2, 56, 62) eine mit einem Medium betriebene Antriebseinheit (4, 64) sowie ein Steuerventil (20, 22) umfasst, der beweglich gelagerte Körper (14) durch die Antriebseinheit (4, 64) angetrieben wird und eine Antriebsbewegung der Antriebseinheit (4, 64) mithilfe des Steuerventils (20, 22) gesteuert wird,
**dadurch gekennzeichnet, dass** das Steuerventil (20, 22) mit einem Steuersignal ($u(t)$) angesteuert wird, welches einen ersten sowie einen weiteren Schaltimpuls ($S_1$, $S_3$) mit jeweils einer vorgegebenen Impulsdauer umfasst, wobei die Impulsdauer des ersten Schaltimpulses ($S_1$) gleich der Impulsdauer des weiteren Schaltimpulses ($S_3$) ist und ein zeitlicher Abstand ($\Delta t_{1\text{-}3}$) zwischen dem Beginn des ersten Schaltimpulses ($S_1$) und dem Beginn des weiteren Schaltimpulses ($S_3$) auf eine Eigenperiodendauer des mechanischen Systems (2, 56, 62) abgestimmt ist.

2. Verfahren nach Anspruch 1,
**dadurch gekennzeichnet, dass** der zeitliche Abstand ($\Delta t_{1\text{-}3}$) zwischen dem Beginn des ersten Schaltimpulses ($S_1$) und dem Beginn des weiteren Schaltimpulses ($S_3$) eine lineare Funktion besagter Eigenperiodendauer ist.

3. Verfahren nach Anspruch 1 oder 2,
**dadurch gekennzeichnet, dass** der zeitliche Abstand ($\Delta t_{1\text{-}3}$) zwischen dem Beginn des ersten Schaltimpulses ($S_1$) und dem Beginn des weiteren Schaltimpulses ($S_3$) mindestens die Hälfte besagter Eigenperiodendauer beträgt.

4. Verfahren nach einem der vorhergehenden Ansprüche,
**dadurch gekennzeichnet, dass**, falls das Steuerventil (20, 22) eine Schaltzeit aufweist, die größer ist als ein Sechstel der Eigenperiodendauer, der zeitliche Abstand ($\Delta t_{1\text{-}3}$) zwischen dem Beginn des ersten Schaltimpulses ($S_1$) und dem Beginn des weiteren Schaltimpulses ($S_3$) eine Funktion dieser Schaltzeit ist.

5. Verfahren nach einem der vorhergehenden Ansprüche,
**dadurch gekennzeichnet, dass** die Impulsdauer des ersten Schaltimpulses ($S_1$) und die Impulsdauer des weiteren Schaltimpulses ($S_3$) jeweils eine lineare Funktion der Eigenperiodendauer sind.

6. Verfahren nach einem der vorhergehenden Ansprüche,
**dadurch gekennzeichnet, dass**, falls das Steuerventils (20, 22) eine Schaltzeit aufweist, die größer ist als ein Sechstel der Eigenperiodendauer, die Impulsdauer des ersten Schaltimpulses ($S_1$) sowie die Impulsdauer des weiteren Schaltimpulses ($S_3$) jeweils eine lineare Funktion dieser Schaltzeit sind.

7. Verfahren nach einem der vorhergehenden Ansprüche,
**dadurch gekennzeichnet, dass** das Steuersignal ($u(t)$) zwischen dem ersten und dem weiteren Schaltimpuls ($S_1$, $S_3$) einen zusätzlichen Schaltimpuls ($S_2$) mit einer vorgegebenen Impulsdauer aufweist.

8. Verfahren nach Anspruch 7,
**dadurch gekennzeichnet, dass** ein zeitlicher Abstand ($\Delta t_{1\text{-}2}$) zwischen dem Beginn des ersten Schaltimpulses ($S_1$) und dem Beginn des zusätzlichen Schaltimpulses ($S_2$) eine lineare Funktion der Eigenperiodendauer ist.

9. Verfahren nach Anspruch 7 oder 8,
**dadurch gekennzeichnet, dass** der erste und der zusätzliche Schaltimpuls ($S_1$, $S_2$) durch eine erste Pause mit einer vorgegebenen Pausendauer voneinander getrennt sind und der zusätzliche und der weitere Schaltimpuls ($S_2$, $S_3$) durch eine zweite Pause mit einer vorgegebenen Pausendauer voneinander getrennt sind, wobei die Pausendauer der ersten Pause und die Pausendauer der zweiten Pause jeweils eine lineare Funktion der Eigenperiodendauer sind.

10. Verfahren nach Anspruch 9,
**dadurch gekennzeichnet, dass** die Pausendauer der ersten Pause gleich der Pausendauer der zweiten Pause ist.

11. Verfahren nach einem der vorhergehenden Ansprüche,
**dadurch gekennzeichnet, dass** das Medium, mit dem die Antriebseinheit (4, 64) betrieben wird, eine Flüssigkeit, insbesondere Öl, ist.

12. Verfahren nach einem der vorhergehenden Ansprüche,
**dadurch gekennzeichnet, dass** das Steuerventil (20, 22) ein Digitalventil ist.

13. Verfahren nach einem der vorhergehenden Ansprüche,
**dadurch gekennzeichnet, dass** der beweglich gelagerte Körper (14) eine Andrückrolle einer Haspelanlage (50) ist und die Antriebseinheit (4, 64) ein Hydraulikzylinder ist.

14. Verfahren nach Anspruch 13,
**dadurch gekennzeichnet, dass** die Andrückrolle mithilfe der Antriebseinheit (4, 64) während eines Aufwickelvorgangs eines Metallbands (52), bei dem das Metallband (52) auf einen Haspeldorn (54) aufgewickelt wird, gegen das Metallband (52) gedrückt wird, wobei die Andrückrolle durch die Antriebsbewegung der Antriebseinheit (4, 64) zumindest während einer Phase des Aufwickelvorgangs derart bewegt wird, dass jeweils dann, wenn ein auf dem Haspeldorn (54) aufliegender Bandanfang (60) des Metallbands (52) zwischen der Andrückrolle und dem Haspeldorn (54) hindurchläuft, die Andrückrolle vom Metallband (52) beabstandet ist.

15. Mechanisches System (2, 56, 62), aufweisend einen beweglich gelagerten Körper (14), eine mit einem Medium betreibbare Antriebseinheit (4, 64) zum Antreiben des beweglich gelagerten Körpers (14) und ein Steuerventil (20, 22) zum Steuern einer Antriebsbewegung der Antriebseinheit (4, 64), **gekennzeichnet durch** eine Steuereinheit (42), welche dazu eingerichtet ist, ein Steuersignal ($u(t)$) zur Ansteuerung des Steuerventils (20, 22) zu erzeugen, welches Steuersignal ($u(t)$) einen ersten sowie einen weiteren Schaltimpuls ($S_1$, $S_3$) mit jeweils einer vorgegebenen Impulsdauer umfasst, wobei die Impulsdauer des ersten Schaltimpulses ($S_1$) gleich der Impulsdauer des weiteren Schaltimpulses ($S_3$) ist und ein zeitlicher Abstand ($\Delta t$) zwischen dem Beginn des ersten Schaltimpulses ($S_1$) und dem Beginn des weiteren Schaltimpulses ($S_3$) auf eine Eigenperiodendauer des mechanischen Systems (2, 56, 62) abgestimmt ist.

## Claims

1. Method for controlling a movement of a movably mounted body (14) of a mechanical system (2, 56, 62), in the case of which method the mechanical system (2, 56, 62) comprises a drive unit (4, 64) which is operated by way of a medium, and a control valve (20, 22), the movably mounted body (14) is driven by way of the drive unit (4, 64), and a drive movement of the drive unit (4, 64) is controlled with the aid of the control valve (20, 22), **characterized in that** the control valve (20, 22) is actuated by way of a control signal (u(t)) which comprises a first and a further switching pulse ($S_1$, $S_3$) in each case with a predefined pulse duration, the pulse duration of the first switching pulse ($S_1$) being equal to the pulse duration of the further switching pulse ($S_3$), and a time interval ($\Delta t_{1-3}$) between the start of the first switching pulse ($S_1$) and the start of the further switching pulse ($S_3$) being adapted to an intrinsic period duration of the mechanical system (2, 56, 62).

2. Method according to Claim 1, **characterized in that** the time interval ($\Delta t_{1-3}$) between the start of the first switching pulse ($S_1$) and the start of the further switching pulse ($S_3$) is a linear function of the said intrinsic period duration.

3. Method according to Claim 1 or 2, **characterized in that** the time interval ($\Delta t_{1-3}$) between the start of the first switching pulse ($S_1$) and the start of the further switching pulse ($S_3$) is at least half of the said intrinsic period duration.

4. Method according to one of the preceding claims, **characterized in that**, if the control valve (20, 22) has a switching time which is longer than a sixth of the intrinsic period duration, the time interval ($\Delta t_{1-3}$) between the start of the first switching pulse ($S_1$) and the start of the further switching pulse ($S_3$) is a function of the said switching time.

5. Method according to one of the preceding claims, **characterized in that** the pulse duration of the first switching pulse ($S_1$) and the pulse duration of the further switching pulse ($S_3$) are in each case a linear function of the intrinsic period duration.

6. Method according to one of the preceding claims, **characterized in that**, if the control valve (20, 22) has a switching time which is longer than a sixth of the intrinsic period duration, the pulse duration of the first switching pulse ($S_1$) and the pulse duration of the further switching pulse ($S_3$) are in each case a linear function of the said switching time.

7. Method according to one of the preceding claims, **characterized in that** the control signal (u(t)) has an additional switching pulse ($S_2$) with a predefined pulse duration between the first and the further switching pulse ($S_1$, $S_3$).

8. Method according to Claim 7, **characterized in that** a time interval ($\Delta t_{1-2}$) between the start of the first switching pulse ($S_1$) and the start of the additional switching pulse ($S_2$) is a linear function of the intrinsic period duration.

9. Method according to Claim 7 or 8, **characterized in that** the first and the additional switching pulse ($S_1$, $S_2$) are separated from one another by way of a first pause with a predefined pause duration, and the additional and the further switching pulse ($S_2$, $S_3$) are separated from one another by way of a second pause with a predefined pause duration, the pause duration of the first pause and the pause duration of the second pause being in each case a linear function of the intrinsic period duration.

10. Method according to Claim 9, **characterized in that** the pause duration of the first pause is equal to the pause duration of the second pause.

11. Method according to one of the preceding claims, **characterized in that** the medium, by way of which the drive unit (4, 64) is operated, is a liquid, in particular oil.

12. Method according to one of the preceding claims, **characterized in that** the control valve (20, 22) is a digital valve.

13. Method according to one of the preceding claims, **characterized in that** the movably mounted body (14) is a pressure roller of a coiler (50), and the drive unit (4, 64) is a hydraulic cylinder.

14. Method according to Claim 13, **characterized in that**, during a winding operation of a metal strip (52), in the case of which winding operation the metal strip (52) is wound onto a coiler drum (54), the pressure roller is pressed against the metal strip (52) with the aid of the drive unit (4, 64), the pressure roller being moved by way of the drive movement of the drive unit (4, 64), at least during one phase of the winding operation, in such a way that the pressure roller is spaced apart from the metal strip (52) in each case when a strip beginning (60) of the metal strip (52), which strip beginning (60) lies on the coiler drum (54), runs through between the pressure roller and the coiler drum (54).

15. Mechanical system (2, 56, 62), having a movably mounted body (14), a drive unit (4, 64) which can be operated by way of a medium for driving the movably mounted body (14), and a control valve (20, 22) for controlling a drive movement of the drive unit (4, 64), **characterized by** a control unit (42) which is set up to generate a control signal (u(t)) for actuating the control valve (20, 22), which control signal (u(t)) comprises a first and a further switching pulse ($S_1$, $S_3$) in each case with a predefined pulse duration, the pulse duration of the first switching pulse ($S_1$) being equal to the pulse duration of the further switching pulse ($S_3$), and a time interval ($\Delta t$) between the start of the first switching pulse ($S_1$) and the start of the further switching pulse ($S_3$) being adapted to an intrinsic period duration of the mechanical system (2, 56, 62).

**Revendications**

1. Procédé de commande d'un mouvement d'un corps monté mobile (14) d'un système mécanique (2, 56, 62), dans lequel le système mécanique (2, 56, 62) comprend une unité d'entraînement (4, 64) actionnée par un milieu ainsi qu'une vanne de commande (20, 22), le corps monté mobile (14) est entraîné par l'unité d'entraînement (4, 64) et un mouvement d'entraînement de l'unité d'entraînement (4, 64) est commandé à l'aide de la vanne de commande (20, 22), **caractérisé en ce que** la vanne de commande (20, 22) est excitée par un signal de commande (u(t)) qui comprend une première et une autre impulsion de commutation ($S_1$, $S_3$) ayant chacune une durée d'impulsion prédéterminée, la durée d'impulsion de la première impulsion de commutation ($S_1$) étant égale à la durée d'impulsion de l'autre impulsion de commutation ($S_3$) et un écart temporel ($\Delta t_{1-3}$) entre le début de la première impulsion de

commutation ($S_1$) et le début de l'autre impulsion de commutation ($S_3$) est accordé à une durée de période propre du système mécanique (2, 56, 60).

2. Procédé selon la revendication 1, **caractérisé en ce que** l'écart temporel ($\Delta t_{1\text{-}3}$) entre le début de la première impulsion de commutation ($S_1$) et le début de l'autre impulsion de commutation ($S_3$) est une fonction linéaire de ladite durée de période propre.

3. Procédé selon la revendication 1 ou 2, **caractérisé en ce que** l'écart temporel ($\Delta t_{1\text{-}3}$) entre le début de la première impulsion de commutation ($S_1$) et le début de l'autre impulsion de commutation ($S_3$) est au moins égal à la moitié de ladite durée de période propre.

4. Procédé selon l'une des revendications précédentes, **caractérisé en ce que**, dans le cas où la vanne de commande (20, 22) a un temps de commutation qui est supérieur à un sixième de la durée de période propre, l'écart temporel ($\Delta t_{1\text{-}3}$) entre le début de la première impulsion de commutation ($S_1$) et le début de l'autre impulsion de commutation ($S_3$) est une fonction de ce temps de commutation.

5. Procédé selon l'une des revendications précédentes, **caractérisé en ce que** la durée d'impulsion de la première impulsion de commutation ($S_1$) et la durée d'impulsion de l'autre impulsion de commutation ($S_3$) sont à chaque fois une fonction linéaire de la durée de période propre.

6. Procédé selon l'une des revendications précédentes, **caractérisé en ce que**, dans le cas où la vanne de commande (20, 22) a un temps de commutation qui est supérieur à un sixième de la durée de période propre, la durée d'impulsion de la première impulsion de commutation ($S_1$) et la durée d'impulsion de l'autre impulsion de commutation ($S_3$) sont à chaque fois une fonction linéaire de ce temps de commutation.

7. Procédé selon l'une des revendications précédentes, **caractérisé en ce que** le signal de commande (u(t)) entre la première et l'autre impulsion de commutation ($S_1$, $S_3$) comprend une impulsion de commutation additionnelle ($S_2$) ayant une durée d'impulsion prédéterminée.

8. Procédé selon la revendication 7, **caractérisé en ce qu'**un écart temporel ($\Delta t_{1\text{-}2}$) entre le début de la première impulsion de commutation ($S_1$) et le début de l'impulsion de commutation additionnelle ($S_2$) est une fonction linéaire de la durée de période propre.

9. Procédé selon la revendication 7 ou 8, **caractérisé en ce que** la première impulsion de commutation et l'impulsion de commutation additionnelle ($S_1$, $S_2$) sont séparées par un premier intervalle d'une durée prédéterminée et l'impulsion de commutation additionnelle et l'autre impulsion de commutation ($S_2$, $S_3$) sont séparées par un second intervalle d'une durée prédéterminée, la durée du premier intervalle et la durée du second intervalle étant à chaque fois une fonction linéaire de la durée de période propre.

10. Procédé selon la revendication 9, **caractérisé en ce que** la durée du premier intervalle est égale à la durée du second intervalle.

11. Procédé selon l'une des revendications précédentes, **caractérisé en ce que** le milieu grâce auquel l'unité d'entraînement (4, 64) est actionnée est un fluide, notamment de l'huile.

12. Procédé selon l'une des revendications précédentes, **caractérisé en ce que** la vanne de commande (20, 22) est une vanne numérique.

13. Procédé selon l'une des revendications précédentes, **caractérisé en ce que** le corps monté mobile (14) est un rouleau de pression d'une bobineuse (50) et l'unité d'entraînement (4, 64) est un vérin hydraulique.

14. Procédé selon la revendication 13, **caractérisé en ce que** le rouleau de pression est pressé contre une bande métallique (52) à l'aide de l'unité d'entraînement (4, 64) pendant un processus d'enroulement de la bande métallique (52) au cours duquel la bande métallique (52) est enroulée sur un mandrin de bobineuse (54), le rouleau de pression étant déplacé par le mouvement d'entraînement de l'unité d'entraînement (4, 64), au moins pendant une phase du processus d'enroulement, de façon qu'à chaque fois qu'un début de bande (60) de la bande métallique (52) appliqué sur le mandrin de bobineuse (54) passe entre le rouleau de pression et le mandrin de bobineuse (54), le rouleau de pression est écarté de la bande métallique (52).

15. Système mécanique (2, 56, 62) comprenant un corps monté mobile (14), une unité d'entraînement (4, 64) pouvant être actionnée par un milieu, destinée à entraîner le corps monté mobile (14), et une vanne de commande (20, 22) destinée à commander un mouvement d'entraînement de l'unité d'entraînement (4, 64), **caractérisé par** une unité de commande (42) qui est conçue pour produire un signal de commande ($u(t)$) destiné à exciter la vanne de commande (20, 22), lequel signal de commande ($u(t)$) comprend une première et une autre impulsion de commutation ($S_1$, $S_3$) ayant chacune une durée d'impulsion prédéterminée, la durée d'impulsion de la première impulsion de commutation ($S_1$) étant égale à la durée d'impulsion de l'autre impulsion de commutation ($S_3$) et un écart temporel ($\Delta t$) entre le début de la première impulsion de commutation ($S_1$) et le début de l'autre impulsion de commutation ($S_3$) est accordé à une durée de période propre du système mécanique (2, 56, 62).

FIG 1

FIG 2

# FIG 3

# FIG 4

# FIG 5

FIG 6

FIG 7

EP 3 252 547 B1

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013015453 A1